# EUROPEAN PATENT APPLICATION

(11) **EP 4 787 971 A1**
(43) Date of publication of application: **05.08.2026**
(21) Application number: 23954321.8
(22) Date of filing: 28.09.2023
(51) Int. Cl.: H04W 36/36, H04W 36/08, H04W 56/00, H04W 72/21, H04W 80/02

(54) **TERMINAL, WIRELESS COMMUNICATION METHOD, AND BASE STATION**

(71) Applicant: NTT DOCOMO, INC., Tokyo 100-6150 (JP)
(72) Inventor: OKUMURA, Mamoru, Tokyo 100-6150 (JP); MATSUMURA, Yuki, Tokyo 100-6150 (JP); HARADA, Hiroki, Tokyo 100-6150 (JP); WANG, Jing, Beijing 100190 (CN)
(74) Representative: Hoffmann Eitle
(86) International application number: PCT/JP2023/035538
(87) International publication number: WO 2025/069351

(57) **Abstract**

A terminal according to one aspect of the present disclosure includes: a transmitting section that transmits a Medium Access Control Control Element (MAC CE) including information indicating a target cell being a cell switch target; and a control section that switches a serving cell to the target cell. According to one aspect of the present disclosure, it is possible to appropriately perform cell switch.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems, it is studied to use L1L2-triggered mobility (LTM) defined in Rel. 18 when a terminal (user terminal, User Equipment (UE)) moves between cells. It is studied that a cell switch command using a MAC CE is transmitted from a base station (gNB) to a UE at the time of cell switch (switch of a serving cell) in LTM.

However, the base station may take time to decide whether or not the cell switch is necessary. Alternatively, if the TCI state of a target cell (candidate cell) to be used for the cell switch is not activated in advance, the cell switch may take time. This may prevent the cell switch from being performed quickly and reduce the communication throughput at the time of the cell switch.

Thus, an object of the present disclosure is to provide a terminal, a radio communication method, and a base station that can appropriately perform cell switch.

### Solution to Problem

A terminal according to one aspect of the present disclosure includes: a transmitting section that transmits a Medium Access Control Control Element (MAC CE) including information indicating a target cell being a cell switch target; and a control section that switches a serving cell to the target cell.

### Advantageous Effects of Invention

According to one aspect of the present disclosure, it is possible to appropriately perform cell switch.

### Brief Description of Drawings

[FIG. 1] FIG. 1 is a diagram to show an example of LTM studied in Rel. 18.
[FIG. 2] FIG. 2 is a diagram to show processing between a UE and a base station (gNB) in LTM in Rel. 18.
[FIG. 3] FIG. 3 is a diagram to show processing of early DL synchronization between a UE and a base station (gNB) in LTM in Rel. 18.
[FIG. 4] FIG. 4 is a diagram to show processing of early UL synchronization between a UE and a base station (gNB) in LTM in Rel. 18.
[FIG. 5] FIG. 5 is a diagram to show the characteristics of CHO, DAPS, and Rel-18 LTM (R18 LTM).
[FIG. 6] FIG. 6A is a diagram to show an example of UE movement in an urban area. FIG. 6B is a diagram to show transition of L1-RSRPs of PCI #1 and PCI #3 corresponding to FIG. 6A.
[FIG. 7] FIG. 7A is a diagram to show an example of a case where a UE passes through a tunnel. FIG. 7B is a diagram to show transition of L1-RSRPs of PCI #1 and PCI #3 corresponding to FIG. 7A.
[FIG. 8] FIG. 8A is a diagram to show an example of a case where a UE moves between cells of a low earth orbit satellite (Low Earth Orbit (LEO)). FIG. 8B is a diagram to show transition of L1-RSRPs of PCI #1 and PCI #3 corresponding to FIG. 8A.
[FIG. 9] FIG. 9 is a diagram to show a configuration of a unified TCI state activation/deactivation MAC CE in Rel. 17.
[FIG. 10] FIG. 10 is a diagram to show an example of a MAC CE for type 1.
[FIG. 11] FIG. 11 is a diagram to show an example of a MAC CE for type 2 (type 2-1/2-2).
[FIG. 12] FIG. 12 is a diagram to show an example of a MAC CE for beam reporting.
[FIG. 13] FIG. 13A and FIG. 13B are diagrams to show differences between a current beam and measured values.
[FIG. 14] FIG. 14A and FIG. 14B are each a diagram to show a MAC CE for UL cell switch command having a TCI state ID in a first embodiment.
[FIG. 15] FIG. 15A and FIG. 15B are each a diagram to show a MAC CE for UL cell switch command having an RS ID in the first embodiment.
[FIG. 16] FIG. 16A and FIG. 16B are each a diagram to show an example of a MAC CE for UL cell switch command having a TCI state ID and an L1-RSRP in the first embodiment.
[FIG. 17] FIG. 17A and FIG. 17B are each a diagram to show an example of a MAC CE for UL cell switch command having an RS ID and an L1-RSRP in the first embodiment.
[FIG. 18] FIG. 18A and FIG. 18B are each a diagram to show a first example of a MAC CE for UL cell switch command in a second embodiment.
[FIG. 19] FIG. 19A and FIG. 19B are each a diagram to show a second example of a MAC CE for UL cell switch command in the second embodiment.
[FIG. 20] FIG. 20A and FIG. 20B are each a diagram to show a third example of a MAC CE for UL cell switch command in the second embodiment.
[FIG. 21] FIG. 21A and FIG. 21B are each a diagram to show a fourth example of a MAC CE for UL cell switch command in the second embodiment.
[FIG. 22] FIG. 22A is a diagram to show a first example of a MAC CE of aspect 4-1. FIG. 22B is a diagram to show a second example of the MAC CE of example 4-1.
[FIG. 23] FIG. 23A is a diagram to show an example of a MAC CE of option 1 of aspect 4-2. FIG. 23B is a diagram to show an example of a MAC CE of option 2 of example 4-2.
[FIG. 24] FIG. 24 is a diagram to show an example of a MAC CE of aspect 4-3.
[FIG. 25] FIG. 25 is a diagram to show an example of a part of a MAC CE of option 1-1 of aspect 5-2.
[FIG. 26] FIG. 26A and FIG. 26B are each a diagram to show an example of a part of a MAC CE of option 1-2 of aspect 5-2.
[FIG. 27] FIG. 27A and FIG. 27B are each a diagram to show an example of a part of a MAC CE of option 2 of aspect 5-2.
[FIG. 28] FIG. 28 is a diagram to show an example of a schematic structure of a radio communication system according to one embodiment.
[FIG. 29] FIG. 29 is a diagram to show an example of a structure of a base station according to one embodiment.
[FIG. 30] FIG. 30 is a diagram to show an example of a structure of a user terminal according to one embodiment.
[FIG. 31] FIG. 31 is a diagram to show an example of a hardware structure of the base station and the user terminal according to one embodiment.
[FIG. 32] FIG. 32 is a diagram to show an example of a vehicle according to one embodiment.

### Description of Embodiments

### (Report Configuration (ReportConfigNR))

ReportConfigNR, which is an RRC information element, defines a trigger criterion for NR measurement report event, CHO, Conditional PSCell Addition (CPA), or Conditional PSCell Change (CPC) event, or Layer 2 UE-to-Network (L2U2N) relay measurement report event. In cases of events labeled AN (N is 1, 2) as those below, the measurement reporting event and the CHO, CPA, and CPC events are based on cell measurement results derived based on an SS/PBCH block or a CSI-RS. Note that serving, neighbor, and Primary Cell (PCell)/Primary Secondary Cell (PSCell) may each be interpreted as a measurement result (L1-RSRP/L1-SINR or the like) of a corresponding one of a serving cell, a neighbor cell, and a PCell/PSCell.

Event A1: Serving becomes better than an absolute threshold.
Event A2: Serving becomes worse than absolute threshold.
Event A3: Neighbor becomes a better offset amount than PCell/PSCell.
Event A4: Neighbor becomes better than an absolute threshold.
Event A5: PCell/PSCell becomes worse than absolute threshold 1, and neighbor/SCell becomes better than another absolute threshold 2.
Event A6: A neighbor cell has a larger offset amount than that of an SCell.

Event D1: The distance between a UE and a reference location (referenceLocation1) becomes greater than a configured threshold (distanceThreshFromReference1), and the distance between the UE and a reference location (referenceLocation2) becomes smaller than a configured threshold (distanceThreshFromReference2). Conditional event A3: A conditional reconfiguration candidate has a better offset amount than that of a PCell/PSCell.
Conditional event A4: A conditional reconfiguration candidate becomes better than an absolute threshold.
Conditional event A5: PCell/PSCell becomes worse than absolute threshold 1, and a conditional reconfiguration candidate becomes better than another absolute threshold 2.
Condition event D1: The distance between a UE and a reference location (referenceLocation1) is greater than a configured threshold (distanceThreshFromReference1), and the distance between the UE and a reference location (referenceLocation2) of a conditional reconfiguration candidate is smaller than a configured threshold (distanceThreshFromReference2).

Conditional event T1: A time in which measurement is performed by a UE exceeds a configured threshold *t1-Threshold* but is smaller than *t1-Threshold + duration*.
Event X1: A UE of serving L2U2N relay becomes worse than absolute threshold 1, and an NR cell becomes better than another absolute threshold 2.
Event X2: A UE of serving L2U2N relay becomes worse than an absolute threshold.
For event I1, the measurement report event is based on a Cross Link Interference (CLI) measurement result, which is derived based on an SRS-RSRP or a CLI-RSSI.
Event I1: Interference becomes higher than an absolute threshold.

### <Event A1>

Event A1 indicates that serving becomes better than the threshold. Specifically, a UE regards that an entering condition of this event is satisfied when condition A1-1 defined below is satisfied, and regards that a leaving condition of this event is satisfied when condition A1-2 is satisfied.
- Condition A1-1 Ms - Hys > Thresh
- Condition A1-2 Ms + Hys < Thresh

The variables in the expressions of conditions A1-1 and A1-2 above are defined as follows.
- Ms denotes a measurement result of a serving cell and does not take an offset into account.
- Hys denotes a hysteresis parameter of this event (specifically, a parameter (hysteresis) defined in the report configuration information (reportConfigNR) for this event).
- Thresh denotes a threshold parameter of this event (specifically, a parameter (a1-Threshold) defined in the report configuration information (reportConfigNR) for this event).
- The unit of Ms is dBm in a case of RSRP and is dB in cases of RSRQ and RS-SINR.
- Hys is expressed in dB.
- The same unit as Ms is applied to Thresh.

### <Event A2>

Event A2 indicates that serving (measurement result of a serving cell) becomes worse than the threshold. Specifically, a UE regards that an entering condition of this event is satisfied when condition A2-1 defined below is satisfied, and regards that a leaving condition of this event is satisfied when condition A2-2 is satisfied. The meanings of the variables in the conditions are similar to those of the variables of A1 above.
- Condition A2-1
   Ms + Hys < Thresh
- Condition A2-2
   Ms - Hys > Thresh

### <Event A3>

Event A3 indicates that neighbor (measurement result of a neighbor cell) becomes better than SpCell by taking an offset into account. Specifically, a UE regards that an entering condition of this event is satisfied when condition A3-1 defined below is satisfied, and regards that a leaving condition of this event is satisfied when condition A3-2 is satisfied.

- Condition A3-1
   Mn + Ofn + Ocn - Hys > Mp + Ofp + Ocp + Off
- Condition A3-2
   Mn + Ofn + Ocn + Hys < Mp + Ofp + Ocp + Off

The variables in the expressions of conditions A3-1 and A3-2 above are defined as follows.
- Mn denotes a measurement result of a neighbor cell and does not take an offset into account.
- Ofn denotes a measurement object-specific offset of a reference signal of a neighbor cell (specifically, a parameter (offsetMO) defined in configuration information (measObjectNR) corresponding to the neighbor cell).
- Ocn denotes a cell-specific offset of a neighbor cell (specifically, a parameter (cellIndividualOffset) defined in configuration information (measObjectNR) corresponding to the frequency of the neighbor cell) and is configured at zero in a case of not being configured for the neighbor cell.
- Mp denotes a measurement result of an SpCell and does not take an offset into account.
- Ofp denotes a measurement object-specific offset of the SpCell (parameter (offsetMO) defined in configuration information (measObjectNR) corresponding to the SpCell).
- Ocp denotes a cell-specific offset of the SpCell (parameter (cellIndividualOffset) defined in configuration information (measObjectNR) corresponding to the SpCell) and is configured at zero in a case of not being configured for the SpCell.
- Hys denotes a hysteresis parameter of this event (specifically, a parameter (hysteresis) defined in the configuration information (reportConfigNR) for this event).
- Off denotes an offset parameter of this event (specifically, a parameter (a3-Offset) defined in the configuration (reportConfigNR) for this event).
- The units of Mn and Mp are dBm for RSRP and are dB for RSRQ and RS-SINR.
- The units of Ofn, Ocn, Ofp, Ocp, Hys, and Off are dB.

### <Event A4>

Event A4 indicates that the neighbor (measurement result of a neighbor cell) is better than the threshold. Specifically, a UE regards that an entering condition of this event is satisfied when condition A4-1 defined below is satisfied, and regards that a leaving condition of this event is satisfied when condition A4-2 is satisfied. The meanings of the variables in the conditions are similar to those of the variables of event A3 above.

```
- Condition A4-1
 Mn + Ofn + Ocn - Hys > Thresh
- Condition A4-2
 Mn + Ofn + Ocn + Hys < Thresh
```

### <Event A5>

Event A5 indicates that SpCell (measurement result of an SpCell) becomes worse than threshold 1, and neighbor (measurement result of a neighbor cell) becomes better than threshold 2. Specifically, a UE regards that an entering condition of this event is satisfied when both of conditions A5-1 and A5-2 defined below are satisfied, and regards that a leaving condition of this event is satisfied when at least one of conditions A5-3 and A5-4 is satisfied. Thresh1 and Thresh2 are each a threshold for this event. The unit of Thresh1 is the same as that of Mp, and the unit of Thresh2 is the same as that of Mn. The meanings of the other variables are similar to those of the variables of event A3 above.

```
- Condition A5-1
 Mp + Hys < Thresh1
- Condition A5-2
 Mn + Ofn + Ocn - Hys> Thresh2
- Condition A5-3
 Mp - Hys > Thresh1
- Condition A5-4
 Mn + Ofn + Ocn + Hys < Thresh2
```

### <Event A6>

Event A6 indicates that neighbor (measurement result of the neighbor cell) becomes better than SCell (measurement result of the SpCell) by taking an offset into account. Specifically, a UE regards that an entering condition of this event is satisfied when condition A6-1 defined below is satisfied, and regards that a leaving condition of this event is satisfied when condition A6-2 is satisfied.

```
- Condition A6-1
 Mn + Ocn - Hys > Ms + Ocs + Off
- Condition A6-2
 Mn + Ocn + Hys < Ms + Ocs + Off
```

In this measurement, a secondary cell (SCell) corresponding to the configuration (measObjectNR) related to this event is regarded as a serving cell. Both the reference signal of the neighbor cell and an SCell reference signal are indicated in the related configuration (measObjectNR). The variables in the expressions of conditions A6-1 and A6-2 above are defined as follows. The meanings of the other variables are similar to those of the variables of event A3 above.
- Ms denotes a measurement result of a serving cell and does not take an offset into account.
- Ocs denotes a cell-specific offset of the serving cell (specifically, cellIndividualOffset defined in the related configuration (measObjectNR)) and is configured at zero in a case of not being configured for the serving cell.

### <Event B1>

Event B1 indicates that an inter-Radio Access Technology (RAT) neighbor cell (measurement result of a neighbor cell) is better than a threshold. For example, when the RAT of the serving cell is LTE (or NR/5G), the inter-RAT neighbor cell may be an NR/5G (LTE) cell. Specifically, a UE regards that an entering condition of this event is satisfied when condition B1-1 defined below is satisfied, and regards that a leaving condition of this event is satisfied when condition B1-2 is satisfied.

```
- Condition B1-1
 Mn + Ofn + Ocn - Hys > Thresh
- Condition B1-2
 Mn + Ofn + Ocn + Hys < Thresh
```

- Mn denotes a measurement result of the inter-RAT neighbor cell without taking an offset into account.
- Ofn denotes a measurement target-specific offset of the frequency of the inter-RAT neighbor cell (specifically, a parameter (utra-Q-OffsetRange) defined in configuration information (measObjectEUTRA) corresponding to the frequency of the inter-RAT neighbor cell or a parameter (utra-FDD-Q-OffsetRange) defined in configuration information (measObjectUTRA-FDD) corresponding to the frequency of the inter-RAT neighbor cell).
- Ocn denotes a cell-specific offset of the inter-RAT neighbor cell (specifically, a parameter (cellIndividualOffset) defined in configuration information (measObjectEUTRA) corresponding to the inter-RAT neighbor cell) and is configured at 0 in a case of not being configured for the neighbor cell.

- Hys denotes a hysteresis parameter of this event (specifically, a parameter (hysteresis) defined in the configuration information (reportConfigInterRAT) for this event).
- Thresh denotes a threshold parameter of this event (specifically, a parameter (b1-ThresholdEUTRA) defined in configuration information (reportConfigInterRAT) for this event or a parameter (b1-ThresholdUTRA-FDD) defined for UTRA-FDD).
- dBm or dB is applied as the unit of Mn according to a measurement amount of the inter-RAT neighbor cell.
- The units of Ofn, Ocn, and Hys are dB.
- The same unit as Mn is used for Thresh.

### <Event B2>

Event B2 indicates that PCell (measurement result of a PCell) becomes worse than threshold 1, and inter-RAT neighbor cell (measurement result of a neighbor cell) becomes better than threshold 2. Specifically, a UE regards that an entering condition of this event is satisfied when both of conditions B2-1 and B2-2 defined below are satisfied, and regards that a leaving condition of this event is satisfied when at least one of conditions B2-3 and B2-4 is satisfied.

```
- Condition B2-1
 Mp + Hys < Thresh1
- Condition B2-2
 Mn + Ofn + Ocn - Hys> Thresh2
- Condition B2-3
 Mp - Hys > Thresh1
- Condition B2-4
 Mn + Ofn + Ocn + Hys < Thresh2
```

- Mp denotes a measurement result of a PCell and does not take an offset into account.
- Thresh1 and Thresh2 are each a threshold for this event. The unit of Thresh1 is the same as that of Mp, and the unit of Thresh2 is the same as that of Mn. The meanings of the other variables are similar to those of the variables of event B1 above.

### <Event T1>

Event T1 indicates that a measurement time of a UE is within a certain time from a threshold. Specifically, a UE regards that an entering condition of this event is satisfied when condition T1-1 defined below is satisfied, and regards that a leaving condition of this event is satisfied when condition T1-2 is satisfied.

```
- Condition T1-1
 Mt > Thresh1
- Condition T1-2
 Mt > Thresh1 + Duration
```

The variables in the expressions are defined as follows.
- Mt is the time in which measurement is performed by the UE.
- Thresh1 denotes a threshold parameter of this event (specifically, a parameter (t1-Threshold) defined in configuration information (reportConfigNR) for this event).
- Duration denotes a parameter indicating the duration of this event (specifically, a parameter (duration) defined in the configuration information (reportConfigNR) for this event).
- The unit of Mt is ms.
- The unit of Thresh1 is the same as the unit of Mt.
- The unit of Duration is the same as the unit of Mt.

### <Event I1>

Event I1 indicates that interference becomes higher than the threshold. Specifically, specifically, a UE regards that an entering condition of this event is satisfied when condition I1-1 defined below is satisfied, and regards that a leaving condition of this event is satisfied when condition I1-2 is satisfied.

```
- Condition I1-1
 Mi - Hys > Thresh
- Condition I1-2
 Mi + Hys < Thresh
```

The variables in the expressions of conditions I1-1 and I1-2 above are defined as follows.
- Mi denotes a measurement result of the interference and does not take an offset into account.
- Hys denotes a hysteresis parameter of this event (specifically, a parameter (hysteresis) defined in the configuration information (reportConfigNR) of this event).
- Thresh denotes a threshold parameter of this event (specifically, a parameter (i1-Threshold) defined in the configuration information (reportConfigNR) of this event).
- The units of Mi and Thresh are dBm.
- The unit of Hys is dB.

### (L1L2-triggered Mobility (LTM) in Rel. 18)

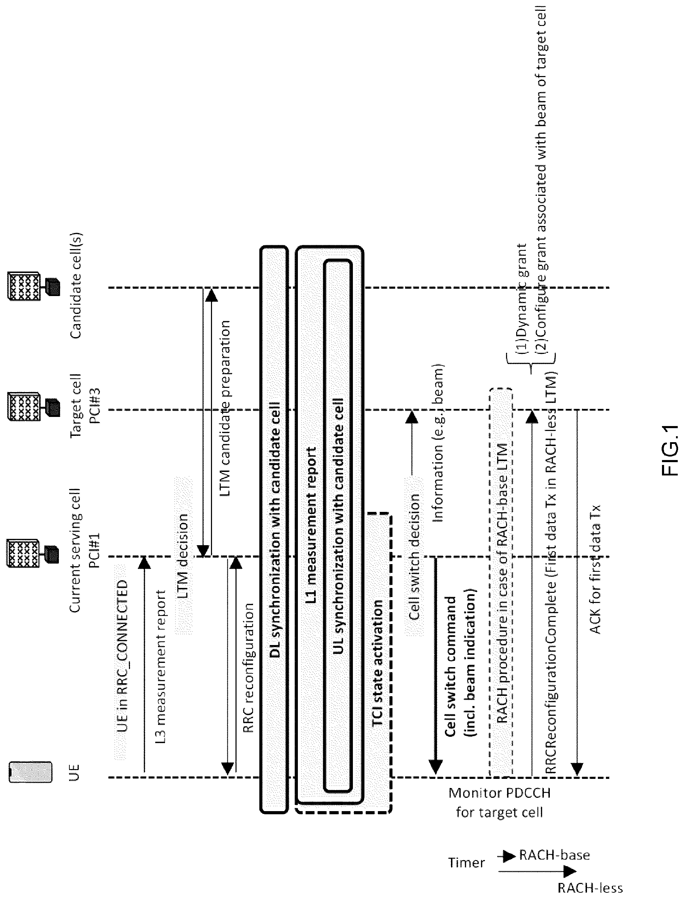

FIG. 1 is a diagram to show an overview of LTM studied in Rel. 18. A UE performs RRC connection on a current serving cell (base station of PCI #1) and transmits an L3 measurement report. The serving cell decides to perform LTM, based on the L3 measurement report, and performs LTM preparation with one or more candidate cells. The UE and the serving cell perform RRC reconfiguration. Note that the one or more candidate cells may include a target cell (base station of PCI #3).

The UE, the serving cell, the target cell, and the candidate cell perform DL synchronization. The UE performs and reports L1 (for example, L1-RSRP/SINR) measurement of the serving cell/candidate cell/target cell. The UE, the serving cell, the target cell, and the candidate cell perform UL synchronization.

The serving cell decides, based on the L1 measurement report, to perform switch of the serving cell to the target cell (PCI #3) and transmits a cell switch command to the UE. After receiving the cell switch command, the UE initiates PDCCH monitoring for the target cell.

In a case of RACH-based LTM, the UE performs a RACH procedure for the target cell. In a case of RACH-less LTM, the UE transmits an RRC reconfiguration complete message and also transmits the first data to the target cell. The transmission of the first data is performed based on a dynamic grant or a configured grant related to a beam of the target cell. The target cell transmits an ACK for this transmission to the UE.

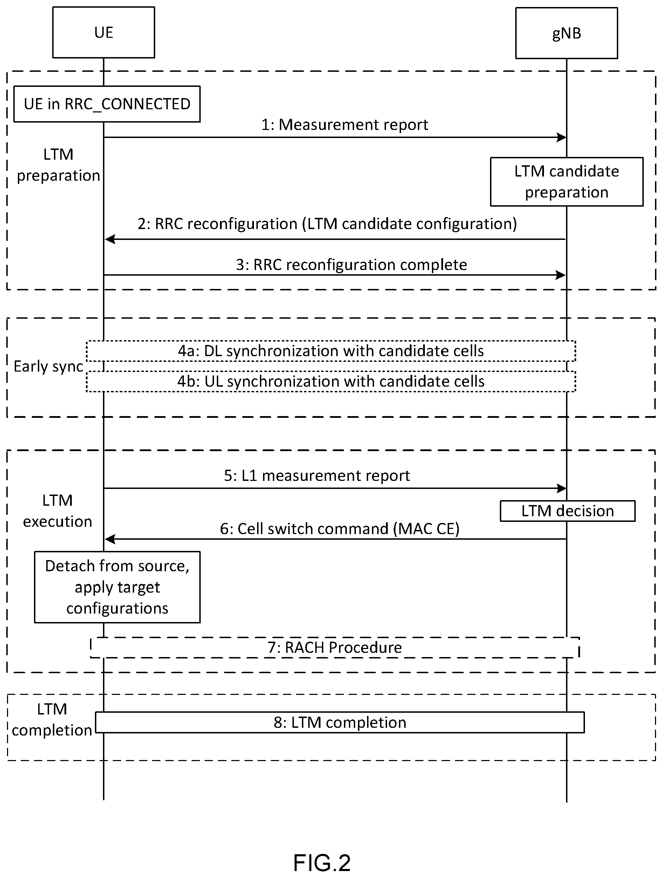

FIG. 2 is a diagram to show processing between a UE and a base station (gNB) in LTM in Rel. 18. The processing of each step in FIG. 2 will be described below in detail.
1: The UE transmits a measurement report message to the gNB. The gNB decides configuration of LTM and initiates preparation of one or more candidate cells.
2: The gNB transmits an RRC reconfiguration message including an LTM candidate cell configuration(s) of the one or a plurality of candidate cells, to the UE.
3: The UE saves the LTM candidate cell configuration(s) and transmits an RRC reconfiguration complete message to the gNB.
4a: The UE performs DL synchronization with one or more candidate cells before receiving a cell switch command. It may be supported that DL synchronization for a candidate cell before a cell switch command is performed based on at least an SSB.
4b: In a case of being requested by a network, the UE performs early TA acquisition with the one or more candidate cells before receiving the cell switch command. This is triggered via CFRA by a PDCCH order from a source cell. The UE then transmits a preamble to an indicated candidate cell. In order to minimize data interruption of the source cell due to Contention Free Random Access (CFRA) to the candidate cell, the UE does not receive an RAR for the purpose of acquiring a TA value. The TA value of the candidate cell is indicated in the cell switch command. The UE does not maintain a TA timer for the candidate cell and ensures validity of TA, based on network implementation.
5: The UE performs L1 measurement configured for the candidate cell and transmits an L1 measurement report to the gNB. The L1 measurement is performed as long as the RRC reconfiguration in step 2 is applied.
6: The gNB decides to perform cell switch to the target cell and transmits a MAC CE (cell switch command) that triggers the cell switch. The MAC CE includes a candidate configuration of the index of the target cell. The UE switches to the target cell and applies the configuration indicated by the candidate configuration index.
7: When the UE does not have valid TA of the target cell, the UE performs a random access procedure on the target cell.
8: The UE transmits an RRC reconfiguration complete message and thereby completes the LTM cell switch procedure. The UE performs the RA procedure in step 7 and regards, when the random access procedure has been successfully completed, LTM execution to have been successfully completed. In RACH-less LTM, the UE regards, when the network judges that the first UL data has been successfully received, the LTM execution to be successfully completed. By receiving a PDCCH specifying the C-RNTI of the UE in the target cell that schedules the next new transmission of the first UL data, the UE judges that the first UL data has been successfully received.

Note that the RRC reconfiguration complete message may always be transmitted in each execution of LTM. Steps 4 to 8 may be performed a plurality of times for subsequent LTM by using the candidate cell configuration provided in step 2.

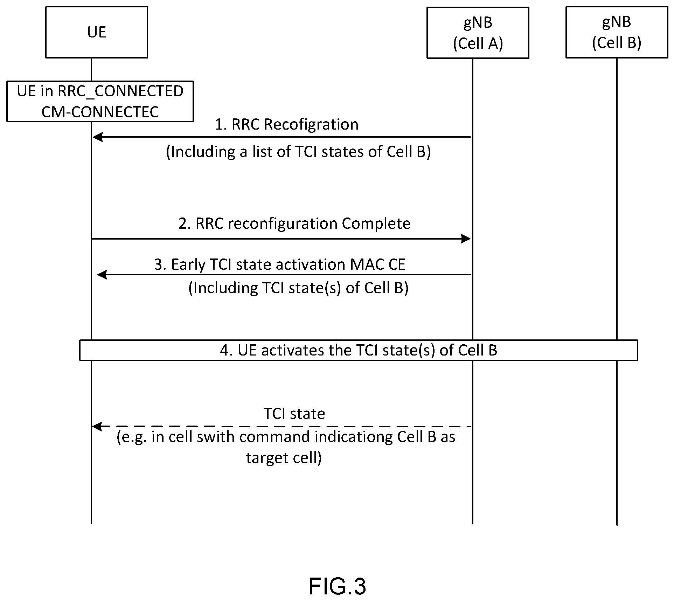

FIG. 3 is a diagram to show processing of early DL synchronization between a UE and a base station (gNB) in LTM in Rel. 18. When configuration is made by a network, RRC connection (RRC_CONNECTED) of the UE to enable DL synchronization with a cell different from the current serving cell is possible. This is enabled by activating in advance the TCI state(s) belonging to a cell with need of early DL synchronization. The processing of each step in FIG. 3 will be described below in detail. In FIG. 3, an early TCI state activation (early DL synchronization) procedure triggered by the network is shown.
1: The gNB to which Cell A belongs provides a list of TCI states of Cell B to the UE in an RRC reconfiguration message. The gNB to which Cell A belongs provides a list of TCI states for one or more cells. The early TCI state activation procedure is performed by the UE for the one or more cells.
2: The UE responds to the gNB with an RRC reconfiguration complete message.
3: The gNB to which Cell A belongs transmits an early TCI state activation MAC CE to initiate an early TCI state activation procedure for Cell B. The early TCI state activation MAC CE may also indicate the TCI state of another cell(s) during the TCI state activation procedure.
4: The UE activates the TCI state(s) of Cell B indicated in the early TCI state activation MAC CE.

The UE assumes early DL synchronization of the gNB to which Cell B belongs. The gNB to which Cell A belongs may initiate the procedure for cell switch to Cell B by providing a cell switch command indicating being a target cell to Cell B.

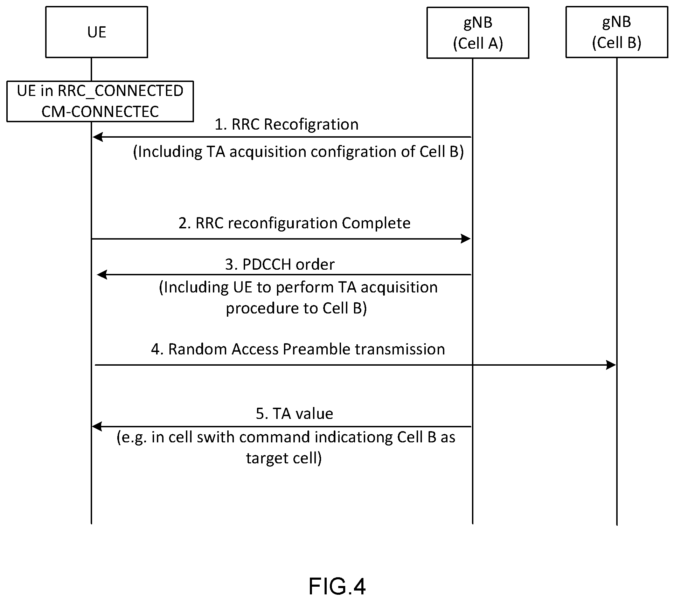

FIG. 4 is a diagram to show processing of early UL synchronization between a UE and a base station (gNB) in LTM in Rel. 18. When configuration is made by a network, RRC connection (RRC_CONNECTED) of the UE to enable UL synchronization with a cell different from the current serving cell is possible. The processing of each step in FIG. 4 will be described below in detail. In FIG. 4, an early TA acquisition (early UL synchronization) procedure triggered by the network is shown.
1: The gNB to which Cell A belongs provides a TA acquisition configuration to the UE in an RRC reconfiguration message. The TA acquisition configuration includes RRC configuration information necessary for transmitting a random access preamble to Cell B. Then, the gNB to which Cell B belongs calculates a TA value to be used by the UE. For example, the LTM cell switch procedure is performed on Cell B. The TA acquisition configuration can include information regarding one or a plurality of cells on which a TA acquisition procedure performed by the UE is performed.
2: The UE responds to the gNB with an RRC reconfiguration complete message.
3: The gNB to which Cell A belongs transmits a PDCCH order message to initiate the TA acquisition procedure for Cell B. The PDCCH order includes information necessary for transmitting a random access preamble to Cell B.
4: In order for the gNB to which cell B belongs to calculate a TA value to be used by the UE, the UE transmits a random access preamble to Cell B (for example, the LTM cell switch procedure when triggered by Cell B). When the gNB to which Cell A belongs fails to acquire TA, the gNB can indicate retransmission of the preamble for TA acquisition.
5: When the LTM cell switch procedure is triggered for Cell B, the gNB to which Cell A belongs provides, to the UE, the TA value calculated by the gNB to which Cell B belongs during the TA acquisition procedure in an LTM cell switch command MAC CE for initiating a procedure for cell switch to Cell B.

### (Conditional Handover(CHO))

Conditional handover (CHO) in Rel. 16 or later versions will be described. CHO is applied to, for example, non-terrestrial networks (NTNs). In an NTN, the following additional trigger conditions for a UE to perform CHO to a candidate cell are supported.
- Radio Resource Management (RRM) measurement-based event A4.
- Time-based trigger condition.
- Location-based trigger condition.

The time-based or location-based trigger conditions are always configured together with any of measurement-based trigger conditions (event A3/A4/A5 of CHO to be described below). How a UE evaluates the time-based or location-based trigger condition together with the RRM measurement-based event depends on UE implementation.

### (Cellular System for 6G)

There is a possibility that a cellular system integrating NTNs and Terrestrial Networks (NTN) are studied for 6G for network resiliency, duration, coverage improvement, new services, and capability improvement. In particular, in such a system, a core network (CN) can also be installed in a satellite. In this case, depending on the service, the communication quality, the location, and the time, the connection destination of a UE may be switched between the TN and the NTN, or the TN and the NTN may be used at the same time. Hence, there is a possibility that a mobility system common to a system in which NTN and TN are combined is studied.

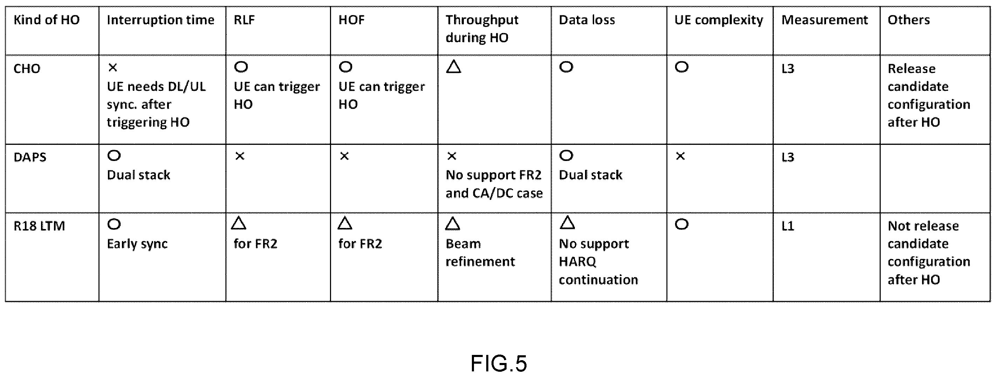

FIG. 5 is a diagram to show characteristics of CHO, Dual active protocol stack based handover (DAPS), and Rel-18 LTM. A UE supports CHO/Conditional PSCell Addition (CPA)/Conditional PSCell Change (CPC) in addition to legacy HO. As shown in FIG. 5, CHO and LTM are superior to DAPS in several respects. In particular, CHO has high robustness. LTM has a short interruption time. In future cellular systems, higher frequencies may be used, leading to more beam-centered systems. (For example, high frequency → high frequency, low frequency → low frequency). In this case, it is conceivable to use L1 measurement reporting in any operation. Hence, it is conceivable to improve mobility based on LTM.

However, in Rel-18 LTM, there is a case where Radio link failure (RLF) and Hand over failure (HOF) are difficult, particularly in FR2.

### (Mobility Scenarios)

### <Scenario 1>

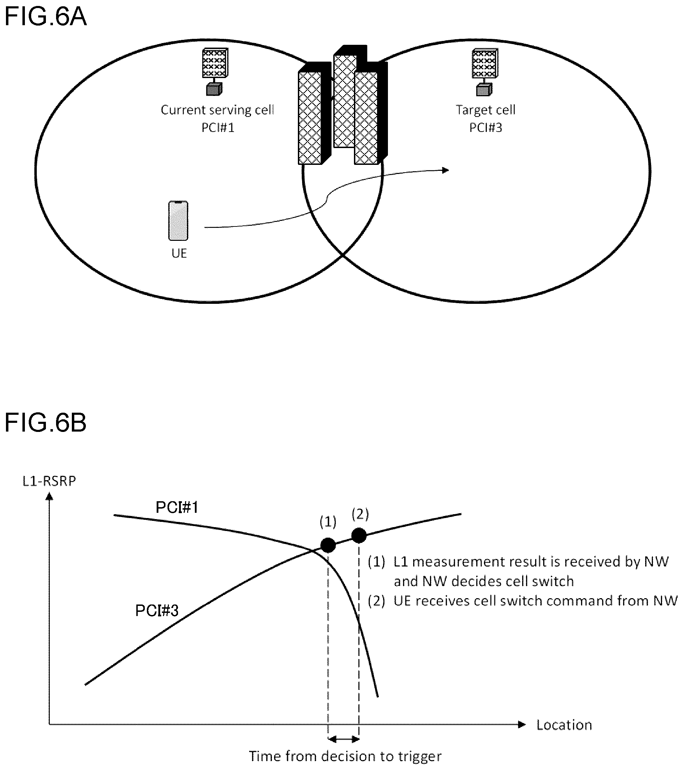

FIG. 6A is a diagram to show an example of UE movement in an urban area. FIG. 6B is a diagram to show transition of L1-RSRPs of PCI #1 and PCI #3 corresponding to FIG. 6A. In a case of FR2, since there are many dynamic channel changes, there is a possibility that the L1 RSRP may rapidly decrease due to the influence of buildings, particularly in urban areas. Hence, Non-Line Of Site (NLOS) and the like frequently occur.

In the example of FIG. 6A, a UE moves from the cell of PCI #1 (current serving cell) to the cell of PCI #3 (target cell). In this case, for example, at (1) of FIG. 6B, when the NW receives a measurement result of L1 and detects a decrease in L1-RSRP, the NW decides cell switch. Then, at (2), an NW transmits a cell switch command to the UE. However, at (2), since the L1-RSRP of PCI #1 is low, there is a possibility that the UE cannot normally receive the cell switch command.

### <Scenario 2>

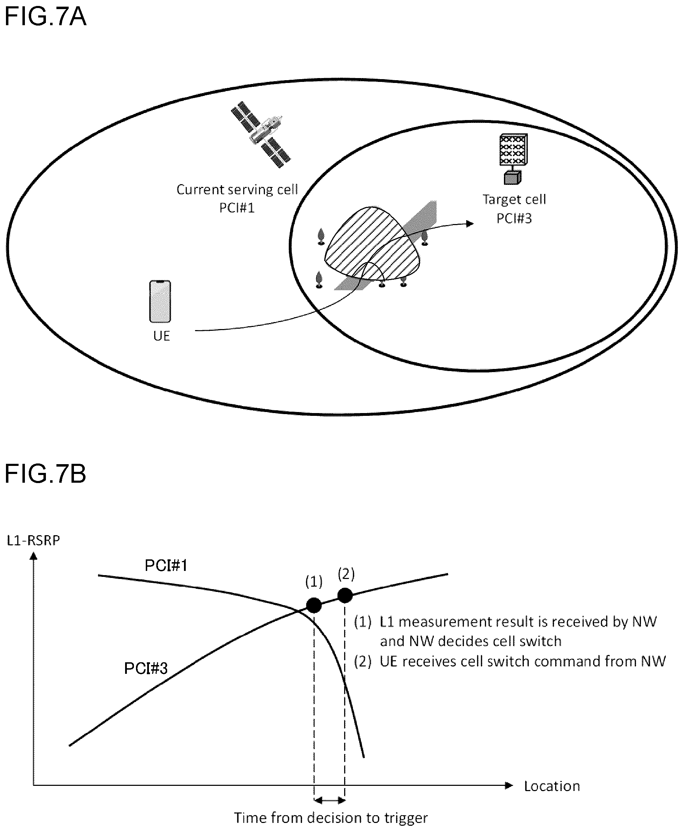

FIG. 7A is a diagram to show an example of a case where a UE passes through a tunnel. FIG. 7B is a diagram to show transition of L1-RSRPs of PCI #1 and PCI #3 corresponding to FIG. 7A. When the UE passes through a tunnel or enters a room, there is a possibility that the L1-RSRP rapidly decreases, and Non-Line Of Site (NLOS) or the like occurs. In this case, as in scenario 1, since the L1-RSRP of PCI #1 rapidly decreases, there is a possibility that the UE cannot normally receive a cell switch command.

### <Scenario 3>

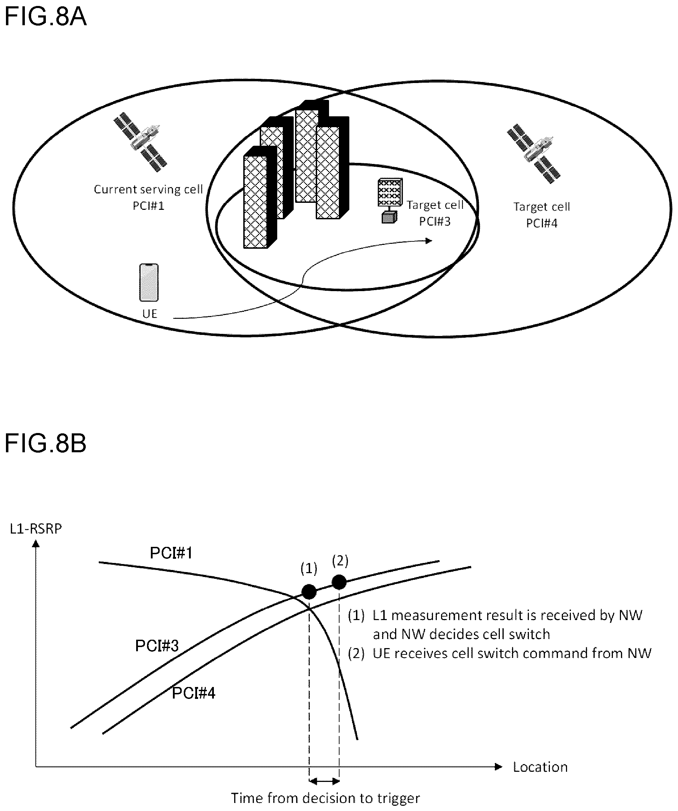

FIG. 8A is a diagram to show an example of a case where a UE moves between cells of a low earth orbit satellite (Low Earth Orbit (LEO)). FIG. 8B is a diagram to show transition of L1-RSRPs of PCI #1 and PCI #3 corresponding to FIG. 8A. In LEO, since the angle of elevation is small, there is a possibility that NLOS and the like occur due to the influence of buildings and the like. In the example of FIG. 8A, a case is assumed where both non-terrestrial networks (NTNs) such as LEO and terrestrial networks (TNs) such as PCI #3 are present. Also in this case, as in scenario 1, since the L1-RSRP of PCI #1 rapidly decreases, there is a possibility that the UE fails to normally receive a cell switch command. This similarly applies to both cases of the mobility between a TN and an NTN (PCI #1 and PCI #3) and the mobility between an NTN and an NTN (PCI #1 and PCI #4).

### (Unified TCI state Activation/Deactivation MAC CE)

A unified TCI state activation/deactivation MAC CE will be described. A network may transmit a unified TCI state activation/deactivation MAC CE to activate/deactivate a configured unified TCI state of a serving cell or a serving cell set configured in the list for simultaneous update of TCI (simultaneousU-TCI-UpdateList1, simultaneousU-TCI-UpdateList2, simultaneousU-TCI-UpdateList3, or simultaneousU-TCI-UpdateList4). The configured unified TCI state is deactivated in an initial state at the time of configuration/reconfiguration by a higher layer and after reconfiguration by synchronization.

When a MAC entity receives a unified TCI state activation/deactivation MAC CE in a serving cell, the MAC entity may indicate information on the unified TCI state activation/deactivation MAC CE to a lower layer.

### {Configuration of Unified TCI State Activation/Deactivation MAC CE}

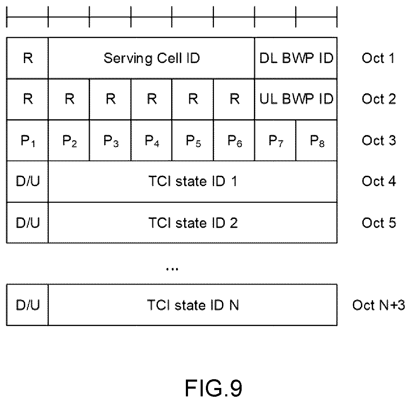

FIG. 9 is a diagram to show a configuration of a unified TCI state activation/deactivation MAC CE in Rel. 17. The unified TCI state activation/deactivation MAC CE is identified by a MAC subheader with an eLCID. This MAC CE has a variable size consisting of the following fields.

Serving Cell ID: This field indicates an ID of a serving cell to which the MAC CE is applied. The length of this field is 5 bits. When the indicated serving cell is configured as a part of the list for simultaneous update of TCI (simultaneousU-TCI-UpdateList1, simultaneousU-TCI-UpdateList2, simultaneousU-TCI-UpdateList3, or simultaneousU-TCI-UpdateList4), this MAC CE is applied to all serving cells in the set of the corresponding one of simultaneousU-TCI-UpdateList1, simultaneousU-TCI-UpdateList2, simultaneousU-TCI-UpdateList3. and simultaneousU-TCI-UpdateList4.
DL BWP ID: This field indicates a DL BWP to which a MAC CE is applied as a codepoint of a DCI bandwidth part indication field. The length of the BWP ID field is 2 bits.
UL BWP ID: This field indicates a UL BWP to which a MAC CE is applied as a codepoint of a DCI bandwidth part indication field. When the value of unifiedTCI-StateType of the serving cell indicated by a serving cell ID indicates joint, this field is regarded as reserved bits. The length of the BWP ID field is 2 bits.
Pi: This field indicates whether each TCI codepoint has a plurality of TCI states or a single TCI state. When the Pi field is configured at 1, this indicates that the TCI codepoint includes a DL TCI state and a UL TCI state. When the Pi field is configured at 0, this indicates that the TCI codepoint includes only a DL/joint TCI state or a UL TCI state. The codepoint to which a TCI state is mapped is determined by the ordinal position of the codepoint in all TCI state ID fields.
D/U: This field indicates whether the TCI state ID in the same octet is a joint/downlink TCI state or an uplink TCI state. When this field is configured at 1, the TCI state ID in the same octet is for joint/downlink. When this field is configured at 0, the TCI state ID in the same octet is for uplink.
TCI state ID: This field indicates a TCI state identified by the TCI state ID. When D/U is configured at 1, a TCI state ID of a length of 7 bits is used. When D/U is configured at 0, the most significant bit of the TCI state ID is regarded as a reserved bit, and the remaining 6 bits indicate a UL TCI state ID. The maximum number of activated TCI states is 16.
R: This denotes a reserved bit and is configured at 0.

### (MAC CE for Beam Reporting)

An example of a new MAC CE for beam reporting will be described below.

### {Option 1}

The MAC CE may be defined for each type of beam reporting (type 1 indicating intra-cell beam reporting, and type 2 indicating inter-cell beam reporting).

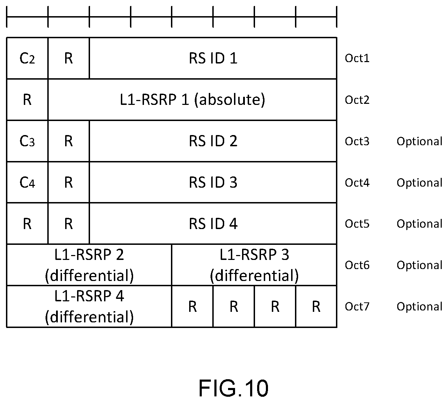

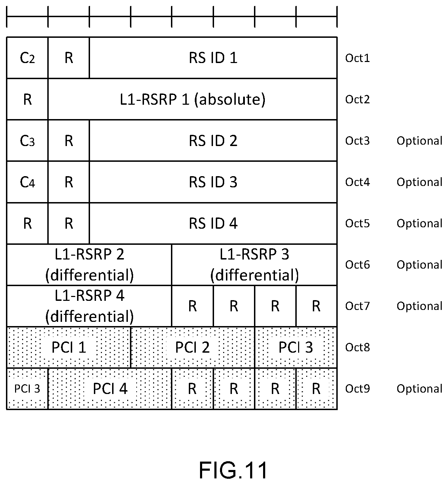

For example, FIG. 10 shows an example of a MAC CE for type 1, and FIG. 11 shows an example of a MAC CE for type 2 (type 2-1/2-2). The MAC CE in FIG. 10 and the MAC CE in FIG. 11 may have different Logical Channel IDs (LCIDs).

As shown in FIG. 10, the MAC CE for type 1 may include fields indicating the second to fourth measurement results and the presence of RSs ("Cᵢ" field (i = 2, 3, 4)), fields indicating the RS IDs corresponding to the top four beams ("RS ID i" field (i = 1, 2, 3, 4)), fields indicating measurement results ("L1-RSRP i" field (i = 2, 3, 4)), and reserved fields ("R" fields).

Each field indicating an RS ID may be constituted of 6 bits in a case of only an SSBRI, or may be constituted of 7 bits in a case of an SSBRI/CRI.

Note that, in the drawings showing examples of a MAC CE in the present disclosure, an example in which a measured result is indicated by an L1-RSRP is illustrated. However, this is merely an example, and the indicator of a measurement result is not limited to this.

In the MAC CE, the field corresponding to the measurement result of the best (top) beam may be defined by a first number of bits (for example, 7 bits). In this case, this field may indicate the absolute value of the measurement result.

In the MAC CE, the fields corresponding to the measurement results of the beams other than the best beam (for example, the measurement results of the second to fourth beams) may each be defined by the second number of bits (for example, 4 bits). In this case, the fields may each indicate a relative value/difference value with respect to the measurement result of the best beam.

In the MAC CE, the fields corresponding to the measurement results of the beams other than the best beam (for example, the measurement results of the second to fourth beams) may be defined by the first number of bits (for example, 7 bits). In this case, this field may indicate the absolute value of the measurement result.

In the MAC CE, the "Cᵢ" field may be expressed by 1 bit. When the "Cᵢ" field indicates a first value (for example, 0), this may indicate that reporting of the corresponding beam is not performed. When the "Cᵢ" field indicates a second value (for example, 1), this may indicate that reporting of the corresponding beam is performed.

For example, when each of a "C₂" field, a "C₃" field, and a "C₄" field indicates 1, the measured result and the RS ID of the second beam, the measured result and the RS ID of the third beam, and the measured result and the RS ID of the fourth beam may be reported in the MAC CE. In other words, only when the "C₂" field, the "C₃" field, and the "C₄" field each indicate 1, the fields (RSRPs/PCIs) corresponding to the second to fourth beams may be present.

In FIG. 10, the fields of octets 3 to 7 may be optional.

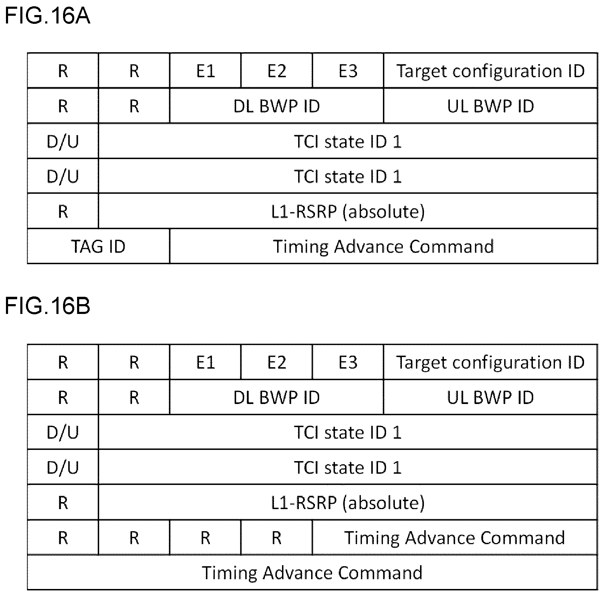

In the MAC CE for type 2 shown in FIG. 11, 16 bits corresponding to octets 8 and 9 are added to the MAC CE for type 1 in FIG. 10.

The additional fields may include fields each indicating the PCI of a serving cell/additional cell/candidate cell ("PCI i" field (for example, i = 1, 2, 3, 4)) and reserved fields ("R" fields). Each field indicating a PCI may be constituted of 3 bits, for example.

According to the additional fields (also utilizing the reserved fields), the PCIs of up to seven additional cells may be indicated in addition to the PCI of one serving cell. The size of each field can be changed as appropriate. The size of each field may be configured by RRC, defined in advance in a specification, or determined by UE capability.

For example, the size of each field indicating an RS ID (RS ID field) may be increased or decreased depending on whether or not the field indicating a PCI (PCI field) is included. For example, when the field indicating a PCI is not included (for example, type 2-1), the RS ID field may be increased/extended (for example, 2 bits). In other words, the size of the PCI field may be variable according to the type of beam reporting.

### {Reporting of Current Beam}

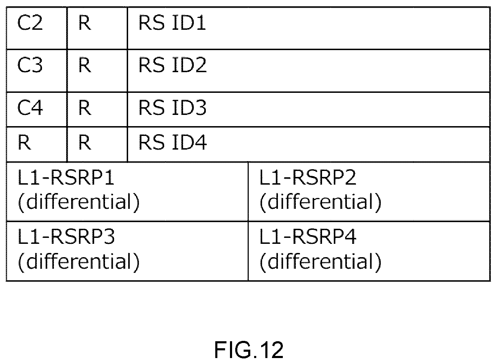

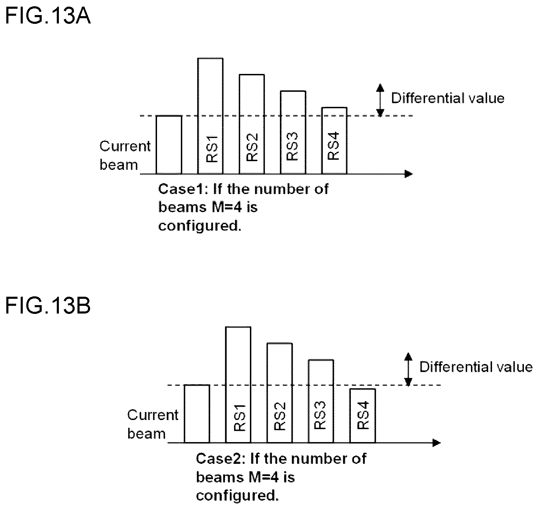

The reporting of a current beam will be described. FIG. 12 is a diagram to show an example of a MAC CE for beam reporting. FIG. 13A and FIG. 13B are diagrams to show differences between a current beam and measured values.

In event-based beam reporting, a UE transmits a beam report only when a specific event has occurred. In this case, the beam to be reported is assumed to be a better beam than the current beam.

Hence, the beam to be reported can be reported as a difference value with respect to the current beam (with reference to the current beam). This can reduce the amount of information (the number of bits) for reporting and save the overhead of the MAC CE. Here, the difference value should always be a positive value for the current beam.

As shown in FIG. 12, the MAC CE may include fields indicating the second to fourth measurement results and the presence of RSs ("Cᵢ" field (i = 2, 3, 4)), fields indicating the RS IDs corresponding to the top four beams ("RS ID i" field (i = 1, 2, 3, 4)), fields indicating measurement results ("L1-RSRP i" field (i = 1, 2, 3, 4)), and reserved fields ("R" fields).

In the MAC CE, each field corresponding to the measurement result of a beam may indicate a relative value/difference value with respect to the measurement result of the current beam. In this case, the measurement value (absolute value) of the current beam need not be included. By targeting only a difference value for reporting, it is possible to reduce the communication overhead of the MAC CE.

By assuming that a beam to be reported is a better beam than the current beam, the difference value of each of RS1 to RS4 with respect to the current beam may be reported as a positive value as shown in FIG. 13A.

In contrast, as shown in FIG. 13B, when a given beam (for example, RS4) is not better than the current beam, the difference value of RS4 may be or need not be reported.

For example, when the MAC CE is used for reporting, the field size is variable. Hence, even if the UE is configured to report four beams, the UE need not report any negative difference value (difference value of RS4) (need not include any negative difference value in reporting targets).

In contrast, when UCI is used for reporting (in a case of UCI-based beam reporting), the payload is fixed. Hence, the UE need report the negative difference value (RS4 difference value).

### <Variations>

Whether to add the absolute value of the L1-RSRP for a current beam may be configured/indicated by higher layer signaling/physical layer signaling, defined in advance in a specification, or determined by reporting of UE capability. For example, when the UE reports UE capability, the UE may add a new field to a MAC CE/UCI for reporting.

### <Further Variations>

Whether to report an absolute value for a current beam may be decided based on a certain threshold. For example, a UE may be configured to report the absolute value for the current beam when the absolute value is smaller/larger than X dB. In this case, X may be configured/indicated by higher layer signaling/physical layer signaling, defined in advance in a specification, or determined by reporting of UE capability. Note that a case where a gNB wants to recognize the absolute value of the current beam is a case where the absolute value is very small (almost equal to being failed).

### (Analysis)

As described above, it is studied to use L1L2-triggered mobility (LTM) defined in Rel. 18 when a terminal (user terminal, User Equipment (UE)) moves between cells. It is studied that a cell switch command using a MAC CE is transmitted from a base station (gNB) to a UE at the time of cell switch (switch of a serving cell) in LTM.

However, the base station may take time to decide whether or not the cell switch is necessary. Alternatively, if the TCI state of a target cell (candidate cell) to be used for the cell switch is not activated in advance, the cell switch may take time. This may prevent the cell switch from being performed quickly and may reduce the communication throughput at the time of the cell switch.

Thus, the inventors of the present invention came up with the idea of a method capable of appropriately performing cell switch.

### (Various Interpretations and so on)

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a base station, a gNB, and a network (NW) may be interchangeably interpreted.

In the present disclosure, an L1-RSRP may be interpreted as an L1-SINR. An RS and a beam may be interchangeably interpreted. Activation and Deactivation may be interchangeably interpreted.

In the present disclosure, a cell, a PCI, a serving cell, a source serving cell, a source cell, a CC, a BWP, a BWP in CC, and a band may be interchangeably interpreted. In the present disclosure, a cell, a PCI, a target configuration ID, a target cell, the cell of an additional PCI, an additional cell, another cell, a non-serving cell, a cell with a different PCI, a candidate cell, a candidate cell ID, a candidate serving cell, a cell having a PCI different from the PCI of a current serving cell, and another serving cell may be interchangeably interpreted. A target cell may be a cell selected from among a plurality of candidate cells.

In the present disclosure, switch, change, and update may be interchangeably interpreted. A serving cell may be interpreted as a serving cell before switch or a serving cell after switch. Cell switch may mean switch of a serving cell.

A function of each field of a MAC CE of each embodiment in the present disclosure may be similar to the function of a corresponding field shown in FIG. 9 to FIG. 12, unless otherwise described. At least a part of the processing of FIG. 1 to FIG. 4 may be combined with processing of each embodiment. For example, an L1 measurement report transmitted by a UE and a cell switch command transmitted by a base station (gNB) may be interpreted as transmission of a MAC CE for UL cell switch command to be transmitted by a UE in a first/second embodiment. When a base station first decides that cell switch is necessary, a DL cell switch command (cell switch command in FIG. 1 and FIG. 2) may be applied, and when a UE decides first that cell switch is necessary, a MAC CE for UL cell switch command according to the first/second embodiment may be applied.

### (Radio Communication Method)

### <Zeroth Embodiment>

Description will be given of whether or not RACH implementation is needed before transmission of a UL cell switch command and a method of handling a case with no RACH implementation, in a case of assuming that Rel-18 LTM is a baseline. Note that initial cell switch may mean the initial cell switch having a new LTM configuration. Meanwhile, in Rel-18 LTM, subsequent LTM is supported. Subsequent LTM is a procedure of subsequent LTM cell switch between a plurality of candidate cells, where a UE does not require reconfiguration by a network. In other words, the next cell switch can be configured by the same LTM configuration as that of the previous cell switch. The cell switch using subsequent LTM corresponds to the following case of second or later cell switch.

### {Case of Initial Cell Switch}

### <<Case of RACH-based LTM (Case where RACH is Performed on Target Cell after Transmission of Cell Switch Command)>>

At least DL synchronization and L1 measurement are needed. When the UE does not perform UL synchronization, a UE may use the same TA as the TA of a source cell for a target cell or may acquire TA by a RACH after a cell switch command. When activation of a TCI state is not performed, the UE may directly report a TCI state ID in a UL cell switch command or identify the beam of the target cell in a RACH after a cell switch command.

### <<Case of RACH-Less LTM (RACH is not Performed on Target Cell after Transmission of Cell Switch Command)>>

At least DL synchronization, L1 measurement, and UL synchronization are needed. When activation of a TCI state is not performed, a UE may report a TCI state ID directly in a UL cell switch command.

### {Case of Second or Later Cell Switch}

In a case of a second or later cell switch, similar processing to that of the case of the initial cell switch may be performed. Hereinafter, processing that can be executed in addition to the processing of the case of the initial cell switch will be described.

A case where DL synchronization is not performed on a target cell is also conceivable. When DL synchronization is not performed, a UE may maintain the previous DL synchronization for the target cell. When UL synchronization is not performed, the UE may already have at least one of TA of a target derived by UE-based TA measurement and a PDCCH ordered RACH with RAR and apply this. When activation of a TCI state is not performed, the target TCI state may have been activated during the previous cell switch.

### {UL Cell Switch Command}

A UL cell switch command may include a target configuration ID (for example, 3 bits) for identifying a cell. The target configuration ID means an index of a configuration of a target cell/candidate cell to be applied to cell switch in LTM. In order to obtain the advantages of LTM (no RACH after cell switch command, short interruption time), the UL cell switch command may include an RS ID, a TCI state ID (for example, 7 bits)/UL TCI state ID (for example, 6 bits), or a Timing Advance Command (TAC) (for example, 6 bits or 12 bits). This UL cell switch command will be described in detail in the first/second embodiment.

### <First Embodiment>

When a condition is satisfied, the UE may transmit, to a base station (gNB), a MAC CE for UL cell switch command including information indicating a target cell being a cell switch target (target configuration ID), perform cell switch (switch of a serving cell) to the target cell, and initiate transmission and reception with the target cell/candidate cell. For example, when at least one of the conditions of the events described above is satisfied, the UE may transmit the MAC CE for UL cell switch command to the base station.

A configuration of the MAC CE for UL cell switch command will be described. Hereinafter, the MAC CE for UL cell switch command may simply be referred to as a MAC CE. The MAC CE for UL cell switch command may include pieces of information (E1, E2, E3) indicating whether or not beam-related information, TA-related information, and BWP-related information of the target cell are included, in order to reduce overhead.

E1 indicates whether the MAC CE includes beam-related information (for example, at least one of D/U (information indicating whether the corresponding TCI state ID corresponds to a joint/downlink TCI state or an uplink TCI state), the TCI state ID, an RS ID, and an L1-RSRP). E2 indicates whether the MAC CE includes Timing Advance (TA)-related information (for example, Timing Advance Group (TAG) ID/timing advance command). E3 indicates whether the MAC CE includes a DL/UL BWP ID. Combination of E1 to E3 and the pieces of information may be other than the above. The MAC CE may include at least one of E1 to E3. For example, E1 to E3 may each be configured at 0 when the corresponding piece of information is not present, and configured at 1 when the corresponding piece of information is present.

The target configuration ID, a candidate cell ID, and a Physical Cell Identity (PCI) may be associated with each other. The association may be configured in advance for the UE by RRC signaling. The target configuration ID may be associated with a part of the candidate cell ID/PCI. This can improve security and reduce the number of bits of the MAC CE compared to a case where the candidate cell ID/PCI is included in the MAC CE.

The MAC CE may individually include, instead of E1, at least one of information indicating whether or not D/U is included, information indicating whether or not a TCI state ID is included, information indicating whether or not an RS ID is included, and information indicating whether or not an L1-RSRP is included. The MAC CE may individually include, instead of E2, at least one of information indicating whether or not a TAG ID is included and information indicating whether or not a timing advance command is included.

Whether the MAC CE for UL cell switch command includes each piece of information may be configured by RRC, may be defined in advance in a specification, or may be determined based on UE capability.

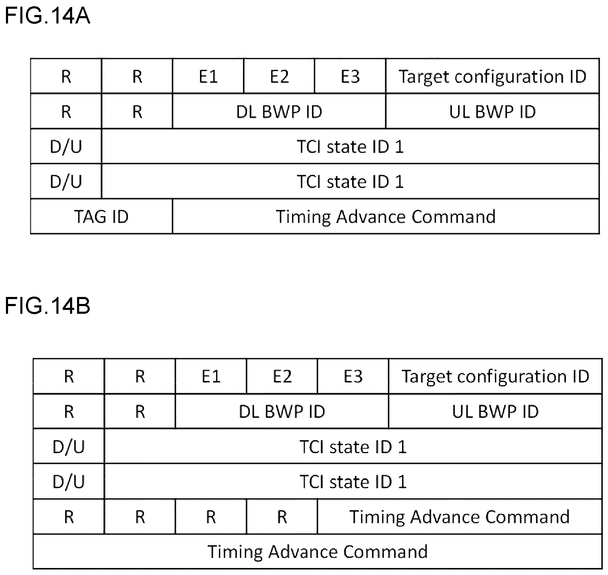

FIG. 14A and FIG. 14B are each a diagram to show a MAC CE for UL cell switch command having a TCI state ID in the first embodiment. Each of the MAC CEs in FIG. 14A and FIG. 14B includes a target configuration ID indicating a target cell being a cell switch target, a DL BWP ID, a UL BWP ID, and a TCI state ID corresponding to a beam to be used. The MAC CE in FIG. 14A further includes a TAG ID and a timing advance command. The MAC CE in FIG. 14B further includes a timing advance command.

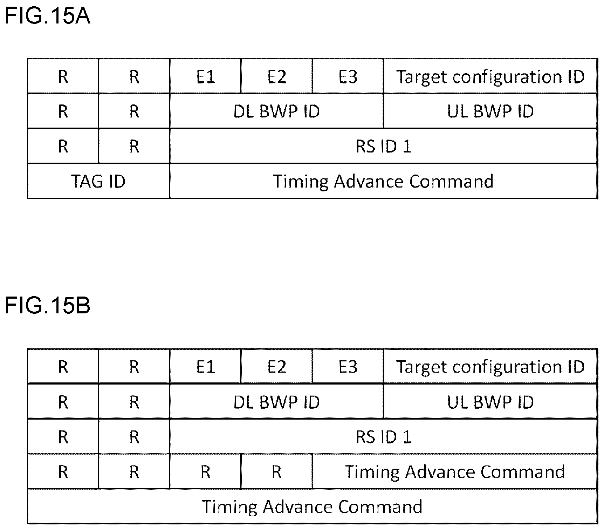

FIG. 15A and FIG. 15B are each a diagram to show a MAC CE for UL cell switch command having an RS ID in the first embodiment. Each of the MAC CEs in FIG. 15A and FIG. 15B includes a target configuration ID indicating a target cell to be switched to, a DL BWP ID, a UL BWP ID, and an RS ID corresponding to a beam to be used. The MAC CE in FIG. 15A further includes a TAG ID and a timing advance command. The MAC CE in FIG. 15B further includes a timing advance command.

The RS ID may be, for example, an SS/PBCH Block Resource Indicator (SSBRI)/Channel State Information-Reference Signal (CSI-RS) Resource Indicator (CRI), and in this case, may be 7 bits.

A "timing advance command" field of the MAC CE may be interpreted as "indication of whether the UE has acquired valid TA," "whether to transmit a RACH to a target cell," or a "RACH resource to be used for a target cell."

The UE can reduce the interruption time at cell switch by transmitting the TCI state ID, the RS ID, the TAG ID, and the timing advance command in advance before the cell switch.

FIG. 16A and FIG. 16B are each a diagram to show an example of a MAC CE for UL cell switch command having a TCI state ID and an L1-RSRP in the first embodiment. Each of the MAC CEs in FIG. 16A and FIG. 16B includes a target configuration ID indicating a target cell to be switched to, a DL BWP ID, a UL BWP ID, and a TCI state ID and an L1-RSRP (absolute value) corresponding to a beam to be used. The MAC CE in FIG. 16A further includes a TAG ID and a timing advance command. The MAC CE in FIG. 16B further includes a timing advance command.

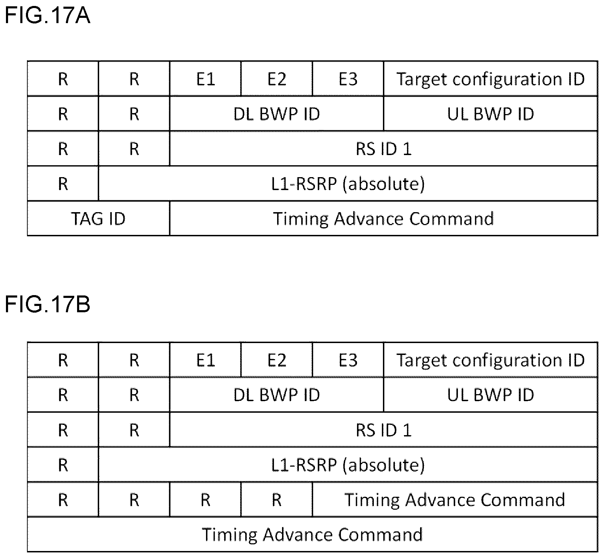

FIG. 17A and FIG. 17B are each a diagram to show an example of a MAC CE for UL cell switch command having an RS ID and an L1-RSRP in the first embodiment. Each of the MAC CEs in FIG. 17A and FIG. 17B includes a target configuration ID indicating a target cell to be switched to, a DL BWP ID, a UL BWP ID, and an RS ID and an L1-RSRP (absolute value) corresponding to a beam to be used. The MAC CE in FIG. 17A further includes a TAG ID and a timing advance command. The MAC CE in FIG. 17B further includes a timing advance command.

The L1-RSRP (absolute value) in each of FIG. 16A, FIG. 16B, FIG. 17A, and FIG. 17B may be the best L1 RSRP among the L1-RSRPs of the RSs received by the UE. The base station (gNB) may transmit an indication to the UE to interrupt cell switch when the received L1 RSRP is lower than a threshold.

According to the first embodiment, a UE notifies a base station of beam-related information, TA-related information, and a DL/UL BWP ID in advance at the time of cell switch, and thus the cell switch can be performed quickly.

### <Second Embodiment>

When a condition is satisfied, a UE may transmit a MAC CE for UL cell switch command including an RS ID and a measurement result of an RS (L1-RSRP) to a base station (gNB), perform cell switch (switch of a serving cell) to the target cell corresponding to the RS, and initiate transmission and reception with the target cell/candidate cell. For example, when at least one of the conditions of the events described above is satisfied, the UE may transmit the MAC CE for UL cell switch command to the base station.

The MAC CE may include information (S1 to S4) indicating whether the corresponding RS ID is used for the target cell to be used for the cell switch. For example, when S1 indicates 1, this means that the RS with RS ID = 1 is used for the target cell to be used for the cell switch, and when S1 indicates 0, this means that the RS with RS ID = 1 is not used for the target cell to be used for the cell switch. Note that S1 to S4 need not be configured for all RS IDs. For example, S1 to S4 may be configured only for the RS ID with the highest L1-RSRP.

Any of S1 to S4 of the MAC CE being 1 may indicate that the MAC CE includes information for cell switch (for example, at least one of a target configuration ID, TA-related information, and a UL/DL BWP ID).

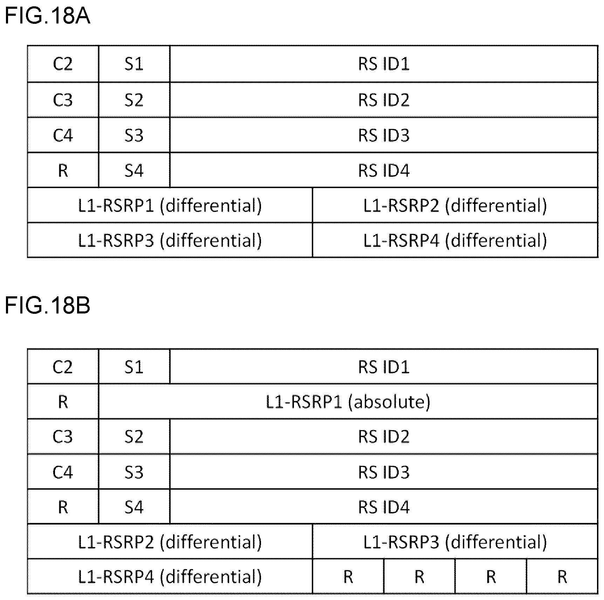

FIG. 18A and FIG. 18B are each a diagram to show a first example of a MAC CE for UL cell switch command in the second embodiment. Since the MAC CEs in FIG. 18A and FIG. 18B are examples in which four of the Rs in the MAC CEs in FIG. 12 and FIG. 10 are replaced with S1 to S4 above, the description of similar parts to those in FIG. 12 and FIG. 10 will be omitted.

When only one RS ID and one L1-RSRP are included, this means that the RS ID and L1-RSRP are reports for cell switch, and the RS ID is to be used for the target cell. For example, in a case of C2 and C3 = 0, only RS ID1 and L1-RSRP1 are included in the MAC CE.

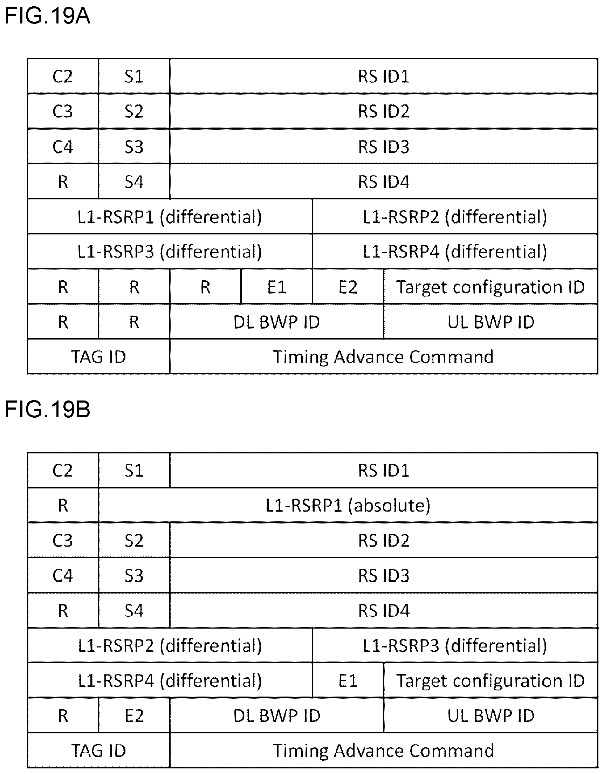

FIG. 19A and FIG. 19B are each a diagram to show a second example of the MAC CE for UL cell switch command in the second embodiment. In FIG. 19A and FIG. 19B, R, E1, E2, a target configuration ID indicating a target cell being a cell switch target, a DL BWP ID, and a UL BWP ID are added to the examples of FIG. 18A and FIG. 18B. E1 indicates whether or not the MAC CE includes DL/UL BWP ID information. E2 indicates whether or not the MAC CE includes a TAG ID/timing advance command.

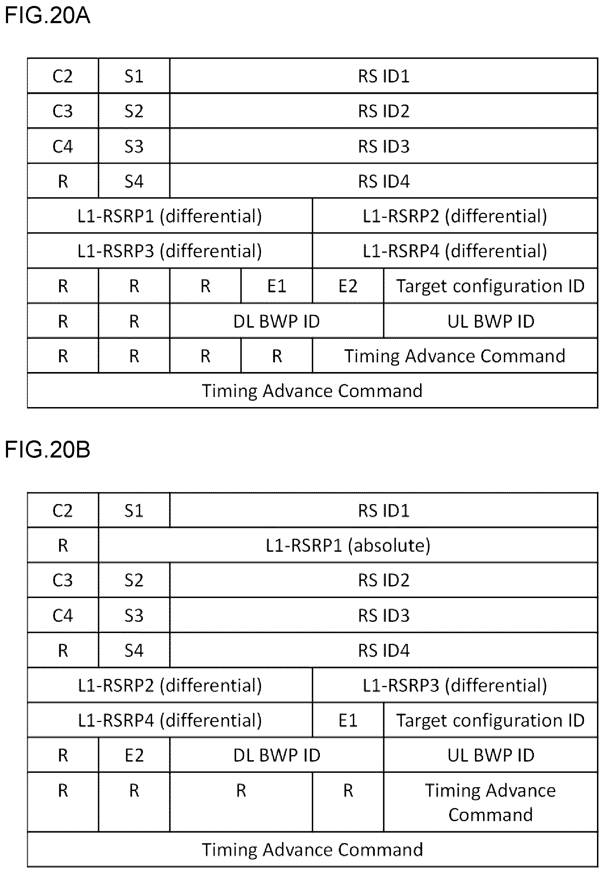

FIG. 20A and FIG. 20B are each a diagram to show a third example of the MAC CE for UL cell switch command in the second embodiment. Each of the MAC CEs in FIG. 20A and FIG. 20B includes two timing advance commands instead of the TAG ID and the timing advance command in the example in each of FIG. 19A and FIG. 19B.

The target configuration ID need not be included in FIG. 19A, FIG. 19B, FIG. 20A, and FIG. 20B. In this case, the target configuration ID may be determined based on the RS ID. In FIG. 19A and FIG. 19B, the DL/UL BWP ID need not be included. In this case (for example, in a case where Rel. 18 is a baseline), the DL/UL BWP ID may be configured in advance by RRC signaling.

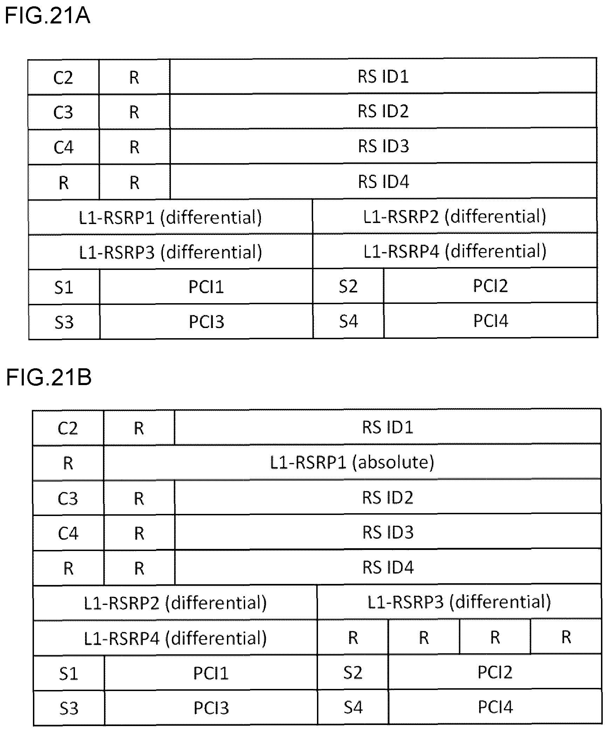

FIG. 21A and FIG. 21B are each a diagram to show a fourth example of the MAC CE for UL cell switch command in the second embodiment. The MAC CEs in FIG. 21A and FIG. 21B are examples in which S1 to S4 and PCIs 1 to 4 are added to the MAC CEs in FIG. 12 and FIG. 10. Description of similar parts to those in FIG. 12 and FIG. 10 will be omitted.

In FIG. 21A and FIG. 21B, S1 to S4 each report which RS ID (PCI1) is used for the target cell to be used for cell switch. In other words, S1 to S4 each indicates whether the corresponding RS ID or PCI is used for the target cell to be used for the cell switch. For example, when S1 indicates 1, this means that the RS with RS ID = 1 and PCI1 are used for the target cell to be used for the cell switch, and when S1 indicates 0, this means that the RS with RS ID = 1 and PCI1 are not used for the target cell to be used for the cell switch. The RS IDs and the PCIs correspond to each other, and the correspondence may be configured in advance by RRC signaling. Hence, the MAC CE may include only either of the RS IDs and the PCIs.

Any of S1 to S4 of the MAC CE being 1 may indicate that the MAC CE includes information for cell switch (target configuration ID, TA-related information, and UL/DL BWP ID).

The MAC CE in FIG. 21A and FIG. 21B may further include the TAG ID/timing advance command shown in FIG. 19A, FIG. 19B, FIG. 20A, and FIG. 20B.

The UE may transmit both the MAC CE of the first embodiment and the MAC CE of the second embodiment or may transmit either one of them. In a case of transmitting both of the MAC CEs, the UE may adjust not to include overlapping items. For example, the UE may transmit the MAC CE in FIG. 18A or FIG. 18B and thereafter transmit the MAC CE in FIG. 14A or FIG. 14B. For example, in a case of transmitting the MAC CE of FIG. 19A, FIG. 19B, FIG. 20A, or FIG. 20B, the UE need not transmit the MAC CE of the first embodiment.

Since the MAC CE in the second embodiment includes RS IDs and measurement results (L1 RSRPs) of RSs, an NW can recognize the quality of a target cell to be used for cell switch at the time of the cell switch.

### <Third Embodiment>

### {Aspect 3-1}

A UE may report initiation of cell switch (trigger cell switch) to an NW (base station) in any of the following methods.
Option 1: The UE reports this by using an UL cell switch command (for example, the MAC CE of the first embodiment).
Option 2: The UE reports this by using event-based beam reporting (for example, the MAC CE of the second embodiment, independent of content).
Option 2: The UE reports this by using event-based beam reporting (for example, MAC CE of the second embodiment, one of S1 to S4 is 1).

The UE may transmit a MAC CE for UL cell switch command to a base station (gNB), based on the DL measurement result (for example, the L1-RSRP/SINR or the like) of a source cell. The UE may transmit the MAC CE for UL cell switch command when the measured result of the source cell (for example, the L1-RSRP/SINR included in a CSI report) is worse (lower) than a certain threshold. For example, the UE may transmit the MAC CE for UL cell switch command when the measurement result is worse (lower) than a certain threshold in a certain period, or when the UE has detected that the measurement result is worse (lower) than the certain threshold a certain number of times. The physical layer may notify the MAC layer of being worse than the threshold, and this may be counted by a counter in the MAC layer.

### {Aspect 3-2}

Operation of the UE after triggering of cell switch (transmission of a UL cell switch command MAC CE) will be described.

In a case of applying the UL cell switch command MAC CE of the first embodiment, the base station/UE may decide whether to perform RACH-less LTM or RACH-based LTM, based on the content of the MAC CE. RACH-less LTM may be performed when at least one of the following conditions is satisfied.
Option 1: E1 indicates 1 (for example, beam-related information is present) and E2 indicates 1 (for example, TA-related information is present).
Option 2: The UE has acquired all pieces of information necessary for cell switch by a signal from the NW (for example, a cell switch command MAC CE in LTM in FIG. 2).

In a case of applying the UL cell switch command MAC CE of the second embodiment, the base station/UE may decide whether to perform RACH-less LTM or RACH-based LTM, based on the content of the MAC CE. RACH-less LTM may be performed when at least one of the following conditions is satisfied.
Option 3: E2 indicates 1 (for example, TA-related information is present).
Option 4: The UE has acquired all pieces of information necessary for cell switch by a signal from the NW (for example, a cell switch command MAC CE in LTM in FIG. 2).

When none of options 1 to 4 are satisfied, RACH-based LTM may be performed. When at least one of options 1 to 4 is satisfied, RACH-based LTM may be performed.

When RACH-based LTM is performed, the UE transmits a PRACH to a target cell by using an RS (SSB) reported by a UL cell switch command (based on Rel-18 LTM) by using a RACH source configured by RRC signaling. Then, the UE stops communication with the source cell.

When RACH-less LTM is performed, the UE transmits the first UL data to the target cell in an occasion (configured by RRC) of a configured grant associated with the SSB reported by the UL cell switch command (based on Rel-18 LTM). Alternatively, the UE monitors a PDCCH of the target cell for dynamic scheduling (for example, based on Rel-18 LTM). Then, the UE stops communication with the source cell.

After the reporting of the UL cell switch command, the operation of the UE according to the present aspect may be initiated after the elapse of a specific time (for example, X ms/symbols/slots). The specific time may be configured for the UE by, for example, RRC signaling, may be defined in advance in a specification, or may be configured based on UE capability. When the UE receives a DL signal from the NW within the specific time, the cell switch may be canceled.

A condition of Rel. 18 may be reused as a cell switch completion condition. For example, step 8 in FIG. 2 may be applied.

### <Fourth Embodiment>

### {Aspect 4-1}

A UE may receive a MAC CE for TCI state activation/deactivation including the TCI state ID(s) of one or more candidate cells, and perform cell switch (switch of a serving cell) to a target cell corresponding to the candidate cell.

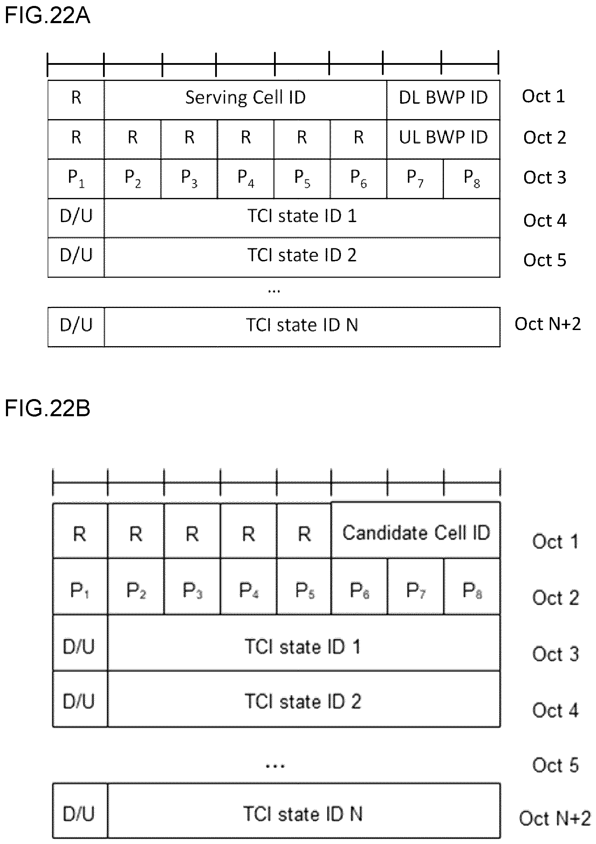

The UE may transmit the MAC CE in the first/second embodiment before the cell switch or may receive the MAC CE for cell switch command shown in FIG. 2 from a base station (gNB). The TCI state of the target cell indicated by the MAC CE in the first/second embodiment may be selected from activated TCI states by a MAC CE in a fourth/fifth/sixth embodiment. This can reduce the number of bits used for the TCI state ID of the MAC CE in the first/second embodiment.
Option 1: The MAC CE may include information indicating whether the TCI state ID(s) of the one or more candidate cells is included in the MAC CE. FIG. 22A is a diagram to show a first example of a MAC CE of example 4-1. For example, when any one of Rs (for example, R in Oct 1) indicates 0, this may indicate that the MAC CE does not include the TCI state ID(s) of the candidate cell(s), and when R indicates 1, this may indicate that the MAC CE includes the TCI state ID(s) of the candidate cell(s). Serving Cel ID in FIG. 22A may be replaced with Candidate Cell ID.

The number of candidate cells corresponding to TCI states that can be activated simultaneously by a single MAC CE may be configured for the UE by RRC signaling, indicated to the UE by the MAC CE, determined in advance in a specification, determined based on UE capability, or configured/indicated/determined for the UE by a combination thereof.
Option 2: The UE may assume/expect that the TCI state ID(s) of one or more candidate cell(s) is always included in the MAC CE. Whether the TCI state ID(s) of the candidate cell(s) is always included in the MAC CE may be configured by RRC/predetermined in a specification/determined based on UE capability.

The number of candidate cells corresponding to TCI states that can be activated simultaneously by a single MAC CE may be configured for the UE by RRC signaling, may be indicated to the UE by the MAC CE, may be determined in advance in a specification, may be determined based on UE capability, or may be configured/indicated/determined for the UE by a combination thereof.
Option 3: A candidate cell ID or a bitmap corresponding to the candidate cell(s) may be included in the MAC CE to indicate whether the TCI state ID(s) of one or more candidate cells is included in the MAC CE. The MAC CE may include a plurality of candidate cell IDs. Each bit of the bitmap may correspond to the TCI state ID of one candidate cell. When all bits of the candidate cell ID(s) or the bitmap each indicate 0 (or 1), the TCI state ID of the candidate cell need not be included in the MAC CE. When all bits of the candidate cell ID(s) or the bitmap each indicate a value other than 0, the TCI state ID of the candidate cell may be included in the MAC CE.

In the MAC CE, a current serving cell ID configured as a candidate cell may be included in the field of a serving cell ID.
Variation: FIG. 22B is a diagram to show a second example of the MAC CE of aspect 4-1. As shown in FIG. 22B, the MAC CE may include one candidate cell ID. A plurality of octet sets in FIG. 22B constitute one set for the MAC CE. Each "R" field of 1 bit in each set (for example, the first set) may indicate whether or not the next set (for example, the second set) is present.

By receiving the MAC CE of the present aspect, the UE can grasp the TCI state ID of the candidate cell to be activated/deactivated before the cell switch, and thus can quickly perform the cell switch.

### {Aspect 4-2}

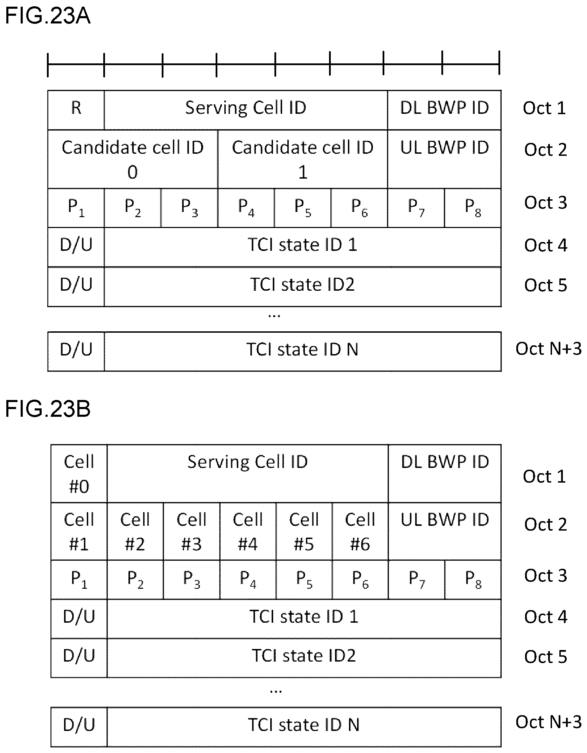

A method of indicating a candidate cell ID for TCI state activation will be described.
Option 1: The MAC CE may include one or more candidate cell IDs for TCI state activation. FIG. 23A is a diagram to show an example of a MAC CE of option 1 of example 4-2. The MAC CE in FIG. 23A includes two 3-bit candidate cell IDs, but the number of candidate cell IDs included in the MAC CE need not be two.

B bits for indication of the candidate cell ID(s) are determined by C candidate cells configured for LTM/TCI state activation (for example, B = [log₂C], B: the number of bits, C: the number of candidate cells configured for LTM/TCI state activation). C may be configured for the UE by RRC signaling, may be indicated to the UE by the MAC CE, may be determined in advance in a specification, may be determined based on UE capability, or may be configured/indicated/determined for the UE by a combination thereof.

Note that in the case of option 3 of example 4-1, for example, B = [log₂C + 1] may hold. A specific bit combination (for example, "000") may mean a known MAC CE. When option 1 of example 4-1 is applied, a bit indicating whether or not the TCI state ID(s) of one or more candidate cells is included in the MAC CE may be included at the position of R in Oct 1 in FIG. 23A.
Option 2: The MAC CE may include a bit (bitmap) for each candidate cell indicating whether the TCI state ID(s) of one or more candidate cells is present in the MAC CE. FIG. 23B is a diagram to show an example of a MAC CE of option 2 of example 4-2. In the example of FIG. 23B, each of Cells #0 to #6 corresponds to the TCI state ID of one candidate cell. For example, when Cell #X is 0, this means that the MAC CE does not include the TCI state ID of the candidate cell corresponding to Cell #X. When Cell #X is 1, this means that the MAC CE includes the TCI state ID of the candidate cell corresponding to Cell #X.

The number of candidate cells corresponding to TCI states that can be activated simultaneously by a single MAC CE may be configured for the UE by RRC signaling, indicated to the UE by the MAC CE, determined in advance in a specification, determined based on UE capability, or configured/indicated/determined for the UE by a combination thereof.

When option 1 of aspect 4-1 is applied, a bit indicating whether or not the TCI state ID(s) of one or more candidate cells is included in the MAC CE may be included at the position of Cell #0 in Oct 1 in FIG. 23B.

By receiving the MAC CE of the present aspect, the UE can grasp the TCI state IDs of the plurality of candidate cells to be activated/deactivated before the cell switch, and thus can quickly perform the cell switch even when a plurality of cells to be candidates for the cell switch are present.

### {Aspect 4-3}

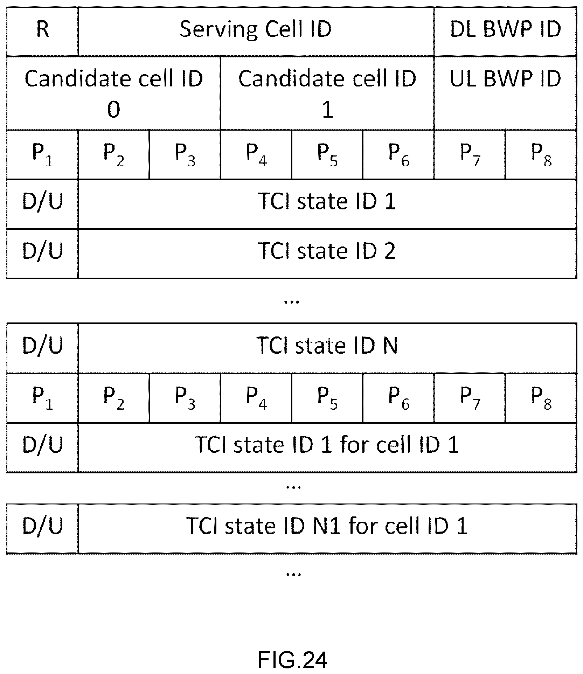

FIG. 24 is a diagram to show an example of a MAC CE of aspect 4-3. As shown in FIG. 24, the MAC CE may include one or more TCI state IDs for each candidate cell ID. For example, TCI states ID 1 to N each indicate the TCI state of candidate cell ID 0, and TCI states ID 1 to N (for Cell ID 1) each indicate the TCI state of candidate cell ID 1. In the example of FIG. 24, TCI state IDs are arranged in ascending order of the candidate cell IDs but may be arranged in descending order of the candidate cell IDs.

The number (N) of TCI state IDs of each candidate cell included in the MAC CE may be determined as in option 1 or 2 below.
Option 1: N is the same as the number of TCI state IDs of a serving cell.
Option 2: N may be configured for the UE by RRC signaling, indicated to the UE by the MAC CE, determined in advance in a specification, determined based on UE capability, or configured/indicated/determined for the UE by a combination thereof.

The number (N) of TCI state IDs of each candidate cell included in the MAC CE may be configured/indicated/determined for each band/CC and for each candidate cell for all candidate cells.

By receiving the MAC CE of the present aspect, the UE can quickly perform cell switch even when a plurality of TCI states corresponding to a candidate cell are present.

### <Fifth Embodiment>

A MAC CE in the fifth embodiment may be combined with at least a part of the MAC CE in the fourth embodiment.

### {Aspect 5-1}

Option 1: The same MAC subheader with eLCID as that of a known MAC CE may be applied, and a specific bit in the MAC CE (for example, the first bit in Oct 1) may indicate whether the configuration of the cell in the subsequent MAC CE is for serving cell or candidate cell. In this case, the known MAC CE (for example, FIG. 9) can be reused. For example, when the specific bit indicates 0, this may indicate that the configuration of the subsequent cell is for serving cell, and when the specific bit indicates 1, this may indicate that the configuration of the subsequent cell is for candidate cell.
Option 2: A new MAC CE (MAC CE different from a MAC CE for serving cell) including the TCI state ID of a candidate cell may be applied. In this case, there is no need to map a bit indicating whether the cell is a serving cell or a candidate cell.

### {Aspect 5-2}

A new MAC CE includes at least one of information indicating one or more candidate cells for which the TCI state ID is used, Pi, D/U, and the TCI state ID.

Pi may be configured for each candidate cell. When Pi indicates 1, this may mean that the cell corresponds to a plurality of TCI states, and when Pi indicates 0, this may mean that the cell corresponds to a single TCI state. D/U may be configured for each TCI state ID. When D/U indicates 1, this may mean a joint/downlink TCI state, and when D/U indicates 0, this may mean an uplink TCI state. The TCI state ID may be, for example, constituted of 6 bits or 7 bits.

As the information indicating one or more candidate cells for which the TCI state ID is used, any of the following options is applied.

Option 1: candidate cell ID for TCI state activation.

Option 2: bitmap (each bit corresponds to a candidate cell).

In a case of option 1, for configuration/indication of the number (C) of candidate cells for which a single MAC CE can activate corresponding TCI states simultaneously, the following options are further conceivable.
Option 1-1: C may be configured for the UE by RRC signaling, may be determined in advance in a specification, may be determined based on UE capability, or may be configured/indicated/determined for the UE by a combination thereof.
Option 1-2: C may be indicated by the single MAC CE.

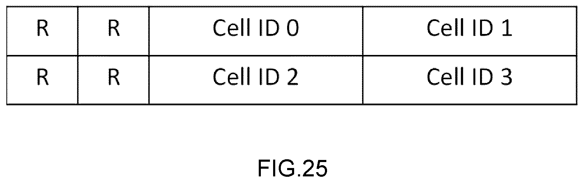

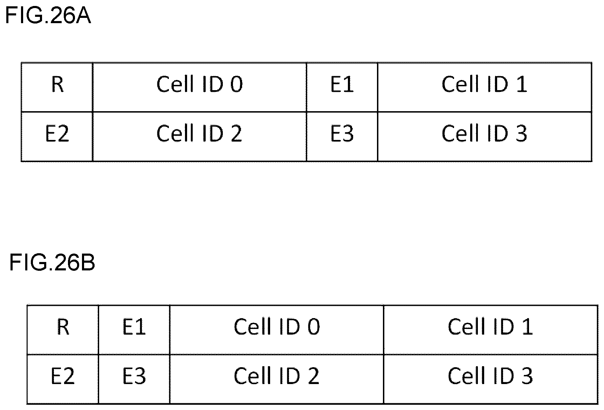

FIG. 25 is a diagram to show an example of a part of a MAC CE of option 1-1 of aspect 5-2. In this example, it is assumed that the number of candidate cells is configured at 4. In this case, E1 to E3 in FIG. 26A and FIG. 26B to be described below are not necessary.

FIG. 26A and FIG. 26B are each a diagram to show an example of a part of a MAC CE of option 1-2 of aspect 5-2. In this example, E1 to E3 indicate whether Cells IDs 1 to 3 are present, respectively (for example, 0: absent, 1: present). Since at least one candidate cell (Cell ID 0 in this example) is present, E0 need not be included.

The total number of candidate cells configured for activation of LTM/TCI state may be configured for the UE by RRC signaling, may be determined in advance in a specification, may be determined based on UE capability, or may be configured/indicated/determined for the UE by a combination thereof.

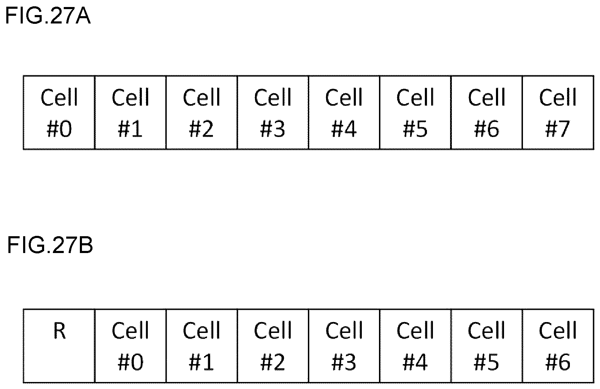

FIG. 27A and FIG. 27B are each a diagram to show an example of a part of a MAC CE of option 2 of aspect 5-2. Each Cell #i (0 to 7 in FIG. 27A, 0 to 6 in FIG. 27B) in FIG. 27A and FIG. 27B corresponds to a candidate cell, and the TCI state ID of the corresponding candidate cell indicates whether or not the MAC CE is present (example: 0: absent, 1: present).

Note that the MAC CE of the present aspect may be combined with any MAC CE of the fourth embodiment. For example, FIG. 25, FIG. 26A, FIG. 26B, FIG. 27A, and FIG. 27B may further include serving cell ID, DL/UL BWP ID, Pi, D/U, TCI state ID, R, and the like. The MAC CE of the present aspect may be combined with the MAC CE of any of the first/second embodiment.

The UE of the present aspect is notified of the number of candidate cells, the presence or absence of a candidate cell, the presence or absence of a TCI state ID of a candidate cell, and the like in a MAC CE, which can thus improve the efficiency of processing without performing unnecessary reading.

### <Sixth Embodiment>

A UE may receive a MAC CE in the present disclosure in at least one of a PCell and an SCell.

When the MAC CE in the present disclosure includes one or more TCI state IDs configured for both a candidate cell and a serving cell, any of the following options may be applied.
Option 1: The UE activates the TCI state(s) configured only for the serving cell.
Option 2: The UE activates the TCI state(s) configured only for the candidate cell.
Option 3: The UE activates the TCI state(s) configured for both the candidate cell and the serving cell.

According to the present embodiment, since notification of the TCI state ID(s) of a candidate cell and a serving cell is made by one MAC CE, it is possible to suppress overhead.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability. Note that "supporting" and "whether to support" may be interchangeably interpreted.

The specific UE capability may indicate at least one of the following:
- supporting of specific processing/operation/control information for at least one of the embodiments above;
- the number (maximum number) of TCI state IDs, RS IDs, and L1-RSRPs included in one MAC CE for UL cell switch command;
- supporting of a MAC CE for UL cell switch command;
- supporting of activation of a TCI state(s) of a candidate cell by a MAC CE;
- the number (maximum number) of candidate cell IDs included in one MAC CE; and
- the number (maximum number) of TCI state IDs corresponding to one candidate cell ID included in the MAC CE.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be any RRC parameter for a specific release (for example, Rel. 18/19) or the like.

When the UE does not support at least one of the specific UE capabilities above or is not configured with the specific information, operation of Rel. 15/16/17 may be applied, for example.

### (Supplementary Notes)

Regarding one embodiment of the present disclosure, the following supplementary notes of the invention will be given.

### {Supplementary Note 1}

A terminal including:
a transmitting section that transmits a Medium Access Control Control Element (MAC CE) including information indicating a target cell being a cell switch target; and
a control section that switches a serving cell to the target cell.

{Supplementary Note 2}

The terminal according to supplementary note 1, wherein
the MAC CE includes at least one of a Transmission Configuration Indication (TCI) state ID, information indicating whether a corresponding TCI state ID is joint or a downlink TCI state or an uplink TCI state, a Reference Signal (RS) ID, and a Layer 1-Reference Signal Received Power (L1-RSRP).

{Supplementary Note 3}

The terminal according to supplementary note 1 or 2, wherein
the MAC CE includes at least one of a Timing Advance Group (TAG) ID and a timing advance command.

{Supplementary Note 4}

The terminal according to any one of supplementary notes 1 to 3, wherein
the control section decides whether to perform Random Access Channel (RACH) less L1L2-triggered mobility (LTM) or perform RACH-based LTM, based on content of the MAC CE.

### (Supplementary Notes)

Regarding one embodiment of the present disclosure, the following supplementary notes of the invention will further be given.

### {Supplementary Note 1}

A terminal including:
a transmitting section that transmits a Medium Access Control Control Element (MAC CE) including a Reference Signal (RS) ID and a measurement result of the RS; and
a control section that switches a serving cell to a target cell corresponding to the RS.

### {Supplementary Note 2}

The terminal according to supplementary note 1, wherein
the MAC CE includes information indicating whether the RS ID is used for a target cell to be used for switch of the serving cell.

### {Supplementary Note 3}

The terminal according to supplementary note 1 or 2, wherein
the MAC CE includes a Physical Cell Identifier (PCI) corresponding to the RS ID.

### {Supplementary Note 4}

The terminal according to any one of supplementary notes 1 to 3, wherein
the control section decides whether to perform Random Access Channel (RACH) less L1L2-triggered mobility (LTM) or perform RACH-based LTM, based on content of the MAC CE.

### (Supplementary Notes)

Regarding one embodiment of the present disclosure, the following supplementary notes of the invention will further be given.

### {Supplementary Note 1}

A terminal including:
a receiving section that receives a Medium Access Control Control Element (MAC CE) for activation or deactivation of a Transmission Configuration Indication (TCI) state, the MAC CE including one or more TCI state IDs of one or more candidate cells; and
a control section that switches a serving cell to a target cell corresponding to the candidate cell.

### {Supplementary Note 2}

The terminal according to supplementary note 1, wherein
the MAC CE includes information indicating whether the one or more TCI state IDs of the one or more candidate cells is included in the MAC CE.

### {Supplementary Note 3}

The terminal according to supplementary note 1 or 2, wherein
the MAC CE includes a bit for each candidate cell, the bit indicating whether one or more IDs of the one or more candidate cells for TCI state activation or the one or more TCI state IDs of the one or more candidate cells is present in the MAC CE.

### {Supplementary Note 4}

The terminal according to any one of supplementary notes 1 to 3, wherein
the MAC CE includes information indicating whether a configuration of a cell in the MAC CE is for a serving cell or for a candidate cell.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

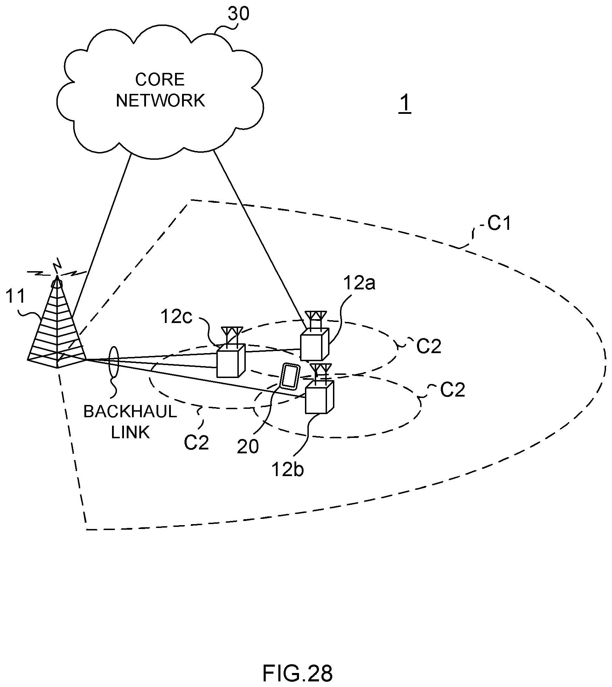

FIG. 28 is a diagram to show an example of a schematic structure of the radio communication system according to one embodiment. A radio communication system 1 (which may be simply referred to as a system 1) may be a system implementing a communication using Long Term Evolution (LTE), 5th generation mobile communication system New Radio (5G NR) and so on the specifications of which have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

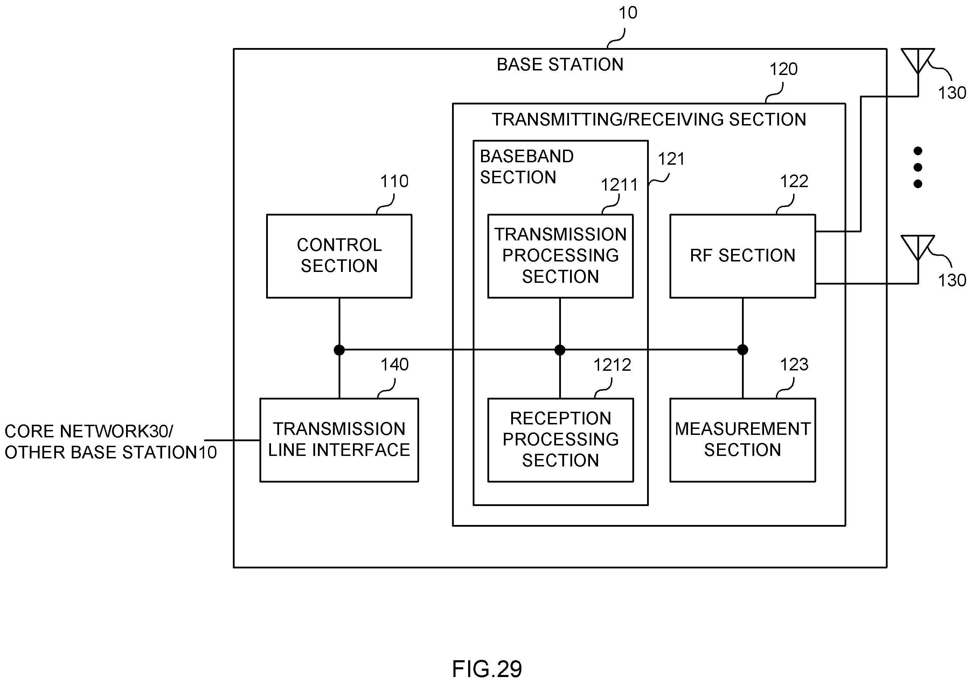

FIG. 29 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may receive a Medium Access Control Control Element (MAC CE) including information indicating a target cell being a cell switch target.

The control section 110 may switch the serving cell to the target cell.

The transmitting/receiving section 120 may receive a Medium Access Control Control Element (MAC CE) including a Reference Signal (RS) ID and a measurement result of the RS.

The control section 110 may switch a serving cell to a target cell corresponding to the RS.

The transmitting/receiving section 120 may transmit a Medium Access Control Control Element (MAC CE) for activation or deactivation of a Transmission Configuration Indication (TCI) state, the MAC CE including a TCI state ID(s) of one or more candidate cells.

The control section 110 may switch a serving cell to a target cell corresponding to the candidate cell.

### (User Terminal)

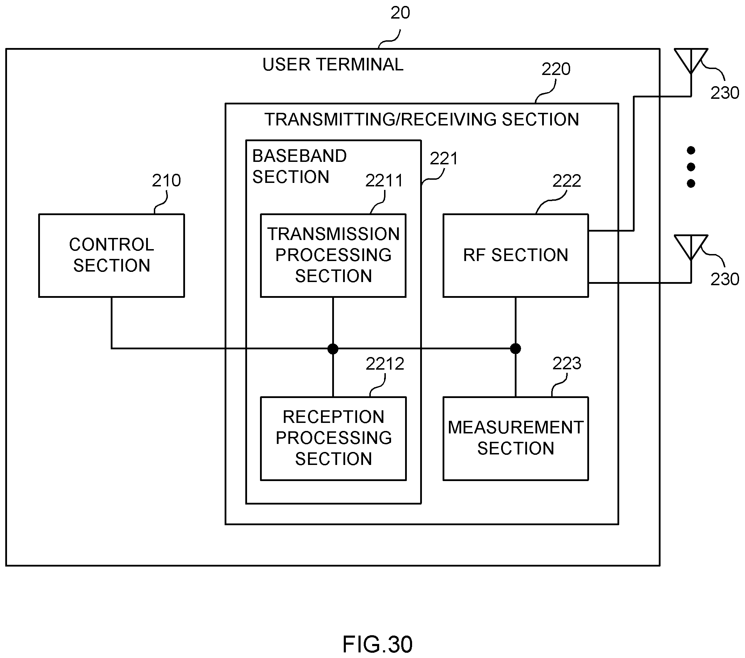

FIG. 30 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may transmit a Medium Access Control Control Element (MAC CE) including information indicating a target cell being a cell switch target.

The control section 210 may switch the serving cell to the target cell.

The MAC CE may include at least one of a Transmission Configuration Indication (TCI) state ID, information indicating whether a corresponding TCI state ID is joint or a downlink TCI state or an uplink TCI state, a Reference Signal (RS) ID, and a Layer 1-Reference Signal Received Power (joint-RSRP).

The MAC CE may include at least one of a Timing Advance Group (TAG) ID and a timing advance command.

The transmitting/receiving section 220 may transmit a Medium Access Control Control Element (MAC CE) including a Reference Signal (RS) ID and a measurement result of the RS.

The control section 210 may switch a serving cell to a target cell corresponding to the RS.
The MAC CE may include information indicating whether the RS ID is used for a target cell to be used for switch of the serving cell.

The MAC CE may include a Physical Cell Identifier (PCI) corresponding to the RS ID.

The control section 210 may decide whether to perform Random Access Channel (RACH) less L1L2-triggered mobility (LTM) or perform RACH-based LTM, based on content of the MAC CE.

The transmitting/receiving section 220 may receive a Medium Access Control Control Element (MAC CE) for activation or deactivation of a Transmission Configuration Indication (TCI) state, the MAC CE including a TCI state ID(s) of one or more candidate cells.

The control section 210 may switch a serving cell to a target cell corresponding to the candidate cell.

The MAC CE may include information indicating whether the TCI state ID(s) of the one or more candidate cells is included in the MAC CE.

The MAC CE may include a bit for each candidate cell, the bit indicating whether a corresponding one of the one or more candidate cells for TCI state activation or the TCI state ID of the corresponding one of the one or more candidate cells is present in the MAC CE.

The MAC CE may include information indicating whether a configuration of a cell in the MAC CE is for a serving cell or for a candidate cell.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

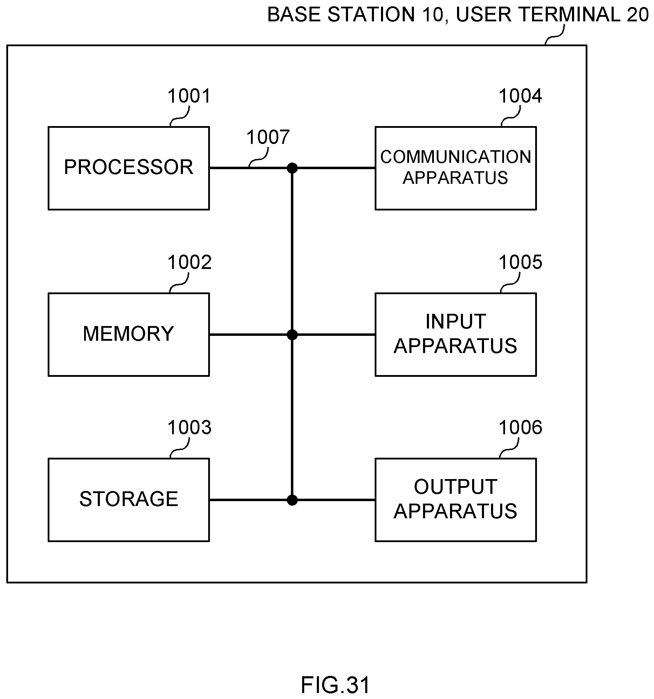

For example, a base station, a user terminal, and so on according to one embodiment of the present disclosure may function as a computer that executes the processes of the radio communication method of the present disclosure. FIG. 31 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

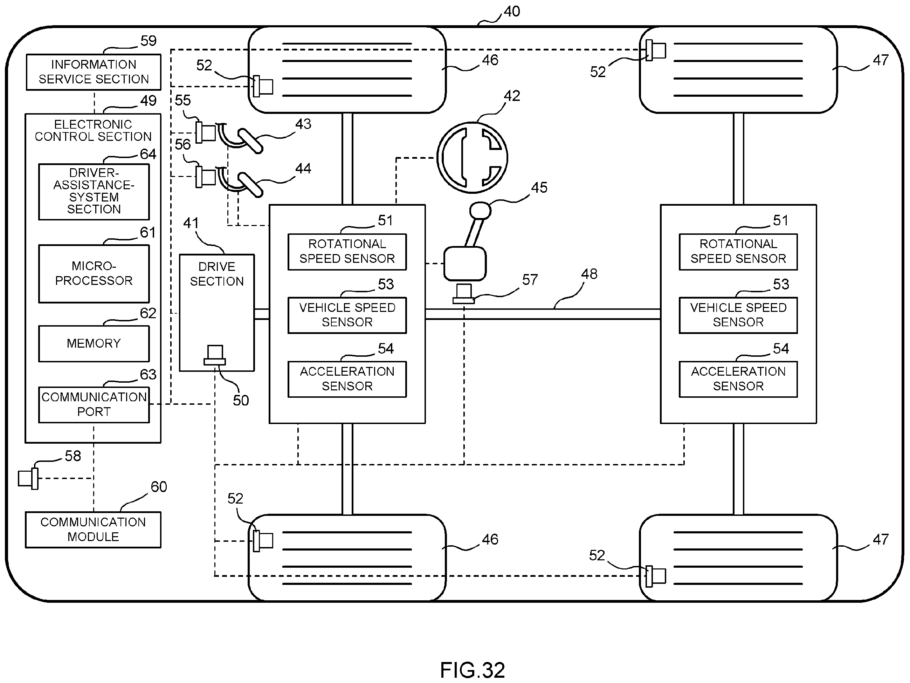

FIG. 32 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a transmitting section that transmits a Medium Access Control Control Element (MAC CE) including information indicating a target cell being a cell switch target; and
a control section that switches a serving cell to the target cell.

2. The terminal according to claim 1, wherein
the MAC CE includes at least one of a Transmission Configuration Indication (TCI) state ID, information indicating whether a corresponding TCI state ID is joint or a downlink TCI state or an uplink TCI state, a Reference Signal (RS) ID, and a Layer 1-Reference Signal Received Power (L1-RSRP).

3. The terminal according to claim 1, wherein
the MAC CE includes at least one of a Timing Advance Group (TAG) ID and a timing advance command.

4. The terminal according to claim 1, wherein
the control section decides whether to perform Random Access Channel (RACH) less L1L2-triggered mobility (LTM) or perform RACH-based LTM, based on content of the MAC CE.

5. A radio communication method for a terminal, the radio communication method comprising:
transmitting a Medium Access Control Control Element (MAC CE) including information indicating a target cell being a cell switch target; and
switching a serving cell to the target cell.

6. A base station comprising:
a receiving section that receives a Medium Access Control Control Element (MAC CE) including information indicating a target cell being a cell switch target; and
a control section that switches a serving cell to the target cell.
